# FASCICULE DE BREVET EUROPEEN

(11) **EP 3 497 144 B1**
(45) Date de publication et mention de la délivrance du brevet: **26.10.2022**
(21) Numéro de dépôt: 17757807.7
(22) Date de dépôt: 01.08.2017
(51) Int. Cl.: C08G 18/10, C09J 175/04, C08L 75/04, C08G 18/76, C08G 18/22

(54) **PROCEDE DE SYNTHESE DE POLYURETHANES SILYLES ET COMPOSITION DE POLYURETHANES SILYLES**
VERFAHREN ZUR SYNTHESE VON SILYLIERTEN POLYURETHANEN UND SILYLIERTE POLYURETHANZUSAMMENSETZUNG
PROCESS FOR THE SYNTHESIS OF SILYLATED POLYURETHANES AND SILYLATED POLYURETHANE COMPOSITION

(30) Priorité: 08.08.2016 FR 1657643
(43) Date de publication de la demande: 19.06.2019
(73) Titulaire: Bostik SA, 92700 Colombes (FR)
(72) Inventeur: LAFERTE, Olivier, 60350 Trosly Breuil (FR)
(74) Mandataire: Arkema Patent
(86) Numéro de dépôt international: PCT/FR2017/052162
(87) Numéro de publication internationale: WO 2018/029420

(56) Documents cités:
- EP-A1- 2 889 348
- WO-A2-2007/037833

## Description

### DOMAINE DE L'INVENTION

La présente invention concerne un procédé de synthèse de polyuréthanes silylés. La présente invention concerne également une composition de polyuréthanes silylés comprenant au moins deux polyuréthanes silylés de masse moléculaire moyenne en nombre différente. La présente invention concerne également l'utilisation des polyuréthanes silylés selon l'invention pour la fabrication d'une composition adhésive, d'une composition de revêtement de surface ou de mastic. La présente invention concerne également un article auto-adhésif comprenant une couche adhésive obtenue par réticulation d'une composition adhésive selon l'invention comprenant lesdits polyuréthanes silylés.

### ARRIERE-PLAN TECHNOLOGIQUE

Les polyuréthanes silylés peuvent être utilisés pour la formulation d'articles auto-adhésifs de type PSA.

Les adhésifs sensibles à la pression (également dénommés colles auto-adhésives ou encore, en anglais, "Pressure Sensitive Adhesives" ou PSA) sont des substances conférant à la couche support aussi appelée substrat qui en est revêtue un pouvoir collant, ou pégosité, immédiat à température ambiante (souvent désigné sous le terme de « tack »), lequel permet son adhésion instantanée à un substrat sous l'effet d'une pression légère et brève. Les PSA sont largement utilisés pour la fabrication d'étiquettes ou de films auto-adhésifs qui sont fixés sur des articles à des fins de présentation d'informations (telles que code barre, dénomination, prix) et/ou à des fins décoratives, que ce soit lors de collages définitifs ou temporaires. Les PSA sont également mis en œuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture ; la fixation et le maintien d'éléments divers tels que panneaux, briques, objets protubérants, dans la construction de bâtiments ou d'édifices ; la fixation et le maintien de parties métalliques ou plastiques ou en verre, plates ou à profil spécifique, tels des câbles électriques, des films plastiques, des vitres, des tôles, des inscriptions, des logos, des parties de sièges, des tableaux de bord, des parois plastiques ou textiles, des conduits ou des tuyaux de circulation de fluides, notamment dans l'industrie des transports ; le collage des moquettes par rubans adhésifs double face.

En vue de la fabrication d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en g/m²) désignée ci-après par le terme de "grammage". La couche support est constituée de papier ou d'un matériau polymérique (par ex. sous forme de feuille, film ou plaque) à une ou plusieurs couches. La couche d'adhésif qui recouvre la couche support peut être elle-même recouverte d'une couche anti-adhérente protectrice (souvent dénommée par l'appellation anglaise de "release liner"), par exemple constituée d'un film plastique siliconé ou feuille de papier siliconée. Le système multicouche obtenu est généralement conditionné par enroulement sous forme de larges bobines ayant typiquement jusqu'à 2 m de largeur et 1 m de diamètre, qui peuvent être stockées et transportées.

Les polymères silylés peuvent également être utilisés dans des compositions de mastics, d'adhésifs ou des compositions de revêtement de surface.

Le document EP 2 889 348 décrit la préparation de polyuréthanes silylés . Le document EP 2 583 988 décrit un procédé de préparation d'un polyuréthane silylé comprenant la formation d'un prépolymère de polyuréthane à terminaisons NCO suivi de la réaction dudit prépolymère polyuréthane à terminaisons NCO avec un aminosilane où chacune des fonctions NCO réagissent avec une fonction amine de l'aminosilane. Un tel procédé dans lequel on fait réagir 100% des fonctions NCO, requiert des quantités importantes d'aminosilanes, matières premières coûteuses. Il a donc été recherché de fournir un procédé de préparation de polyuréthane silylé plus économique.

Le document WO 02/06367 divulgue un procédé de préparation d'un polyuréthane silylé ou mélange de polyuréthanes silylés comprenant la formation d'un prépolymère de polyuréthane à terminaisons NCO suivi de la réaction dudit prépolymère polyuréthane à terminaisons NCO avec un aminosilane ou un mercaptosilane où la quantité de fonctions NCO peut être supérieure ou égale à la quantité de fonctions amine ou thiol. Dans le cas où la quantité de fonctions NCO est supérieure à la quantité de fonctions amine ou thiol, ce document divulgue la possibilité d'ajouter un monol au mélange de polymères obtenu afin de neutraliser les fonctions NCO libres en réagissant avec elles. Le temps de réticulation du mélange de polymères silylés obtenu à l'issue du procédé de fabrication décrit dans le document WO 02/06367 est élevé.

Or, il est généralement souhaitable que le temps de réticulation, en particulier du ou des polymères silylés, ne soit pas trop élevé afin d'accélérer le temps de prise pour les compositions de mastic ou de revêtement de surface ou le temps de fabrication des articles auto-adhésifs pour les compositions adhésives destinées à la fabrication de PSA.

Le document WO 2007/037833 divulgue une composition réticulable comprenant un polymère silylé, un catalyseur et au moins un polyol. Le polyol est utilisé comme plastifiant et est ajouté à la composition une fois que celle-ci ne comprend plus de fonctions NCO libres. Ainsi, dans ce document WO 2007/037833, le polyol ne réagit pas avec les fonctions NCO libres. La viscosité de la composition décrite dans ce document n'est pas stable dans le temps, en particulier, la viscosité a tendance à augmenter au cours du temps.

Ainsi, le but de la présente invention est de fournir un procédé de fabrication d'une composition de polyuréthanes silylés plus économique, ladite composition de polyuréthanes présentant de bonnes performances, et notamment une vitesse de réticulation élevée et/ou une bonne stabilité.

### RESUME DE L'INVENTION

Un premier objet de la présente invention concerne un procédé de synthèse d'une composition de polyuréthanes silylés (A), ledit procédé comprenant les étapes séquentielles :
(i) de polyaddition d'au moins un polyol (B) avec au moins un diisocyanate (C), dans laquelle le ratio (r1) du nombre de fonctions NCO sur le nombre total de fonctions OH, et de fonctions NH et NH₂ éventuellement présentes, est strictement supérieur à 1;
(ii) de réaction de la composition obtenue à l'étape (i) avec au moins un silane (E) choisi parmi les aminosilanes (El) et les mercaptosilanes (E2), dans laquelle le ratio (r2) du nombre de fonctions NCO sur le nombre de fonctions amine et/ou thiol est strictement supérieur à 1;
(iii) de réaction de la composition issue de l'étape (ii) avec au moins un composé (G) comprenant au moins deux fonctions identiques ou différentes choisies parmi les fonctions alcool, amine primaire, amine secondaire et thiol, dans laquelle le ratio (r3) du nombre de fonctions NCO sur le nombre de fonctions alcool, amine primaire, amine secondaire et thiol est inférieur ou égal à 1.

En particulier, la présente invention concerne un procédé de synthèse d'une composition de polyuréthanes silylés (A), ledit procédé comprenant les étapes séquentielles :
(i) de polyaddition d'au moins un polyol (B) avec au moins un diisocyanate (C), dans laquelle le ratio (r1) du nombre de fonctions NCO sur le nombre de fonctions OH, et NH et NH₂ éventuellement présentes, est strictement supérieur à 1 ;
(ii) de réaction d'au moins un polyuréthane (D) possédant au moins deux fonctions NCO obtenu à l'étape (i) avec au moins un silane (E) choisi parmi les aminosilanes (El) et les mercaptosilanes (E2), dans laquelle le ratio (r2) du nombre de fonctions NCO sur le nombre de fonctions amine et/ou thiol est strictement supérieur à 1 ;
(iii) de réaction d'au moins un mélange de polyuréthanes silylés (F) et (F') issu de l'étape (ii) avec au moins un composé (G) comprenant au moins deux fonctions identiques ou différentes choisies parmi les fonctions alcool, amine primaire, amine secondaire et thiol, dans laquelle le ratio (r3) du nombre de fonctions NCO sur le nombre de fonctions alcool, amine primaire, amine secondaire et thiol est inférieur ou égal à 1.

Un second objet de la présente invention concerne une composition de polyuréthanes silylés (A) comprenant un premier type de polyuréthane silylé (A1) de formule (I) et de masse moléculaire moyenne en nombre Mn(1) allant de 800 à 100000 Dalton et un deuxième type de polyuréthane silylé (A2) de formule (IIa), (IIb) ou (IIc) et de masse moléculaire moyenne en nombre Mn(2) telle que le rapport Mn(2)/Mn(1) est supérieur ou égal à 2,0, de préférence Mn(2) étant inférieure ou égale à 200 000 Dalton, et plus préférentiellement Mn(2) allant de 1600 à 200000 Dalton :

(R⁵O)₃₋ₚ(R⁴)ₚSi-R³-X- Jg- [Lg]ₙ - Mg - X - R³ - Si(R⁴)ₚ(OR⁵)₃₋ₚ (I)

(R⁵O)₃₋ₚ(R⁴)ₚSi-R³-X- Jg - [Lg]ₘ - Mg - A - R⁶ - A' - Md - [Ld]ₘ - Jd - X - R³ - Si(R⁴)ₚ(OR⁵)₃₋ₚ (IIa)

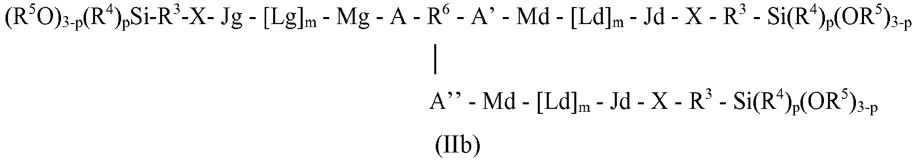

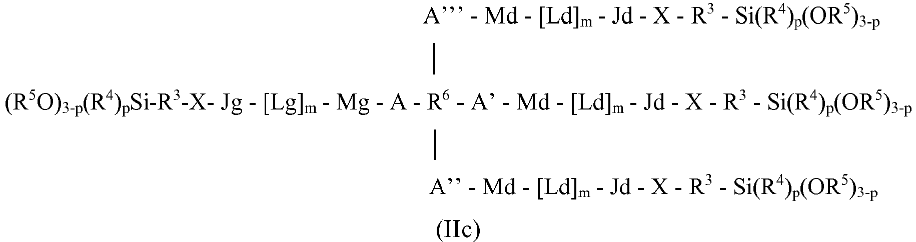

formules dans lesquelles :
Jg représente un groupement de type : 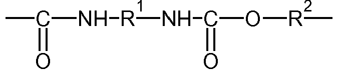
Lg représente un groupement de type : 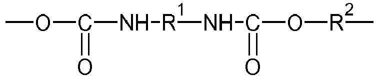
Mg représente un groupement de type : 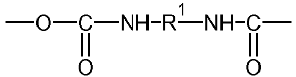
Jd représente un groupement de type : 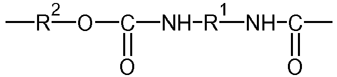
Ld représente un groupement de type : 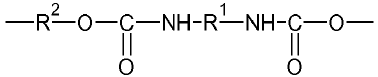
Md représente un groupement de type : 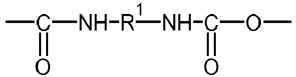
R¹ représente un radical divalent hydrocarboné comprenant de 5 à 15 atomes de carbone qui peut être aromatique ou aliphatique, linéaire, ramifié ou cyclique,
R³ représente un radical divalent alkylène linéaire ou ramifié comprenant de 1 à 6 atomes de carbone,
R² représente un radical divalent hydrocarboné comprenant éventuellement un ou plusieurs hétéroatomes, présentant de préférence une masse moléculaire moyenne en nombre allant de 100 g/mol à 30000 g/mol,
R⁴ et R⁵, identiques ou différents, représentent chacun un radical alkyle linéaire ou ramifié comprenant de 1 à 4 atomes de carbone, deux groupements -OR⁵ pouvant éventuellement être engagés dans un même cycle,
X représente un radical divalent choisi parmi -NH-, -NR⁷- ou -S-,
R⁷ représente un radical alkyle linéaire, ramifié ou cyclique ayant de 1 à 12 atomes de carbone ou un radical alcényle ayant de 2 à 12 atomes de carbone ou un radical aryle ayant de 6 à 12 atomes de carbone,
R⁶ représente un radical divalent, trivalent ou tétravalent polysiloxane ou un radical divalent, trivalent ou tétravalent hydrocarboné comprenant éventuellement une ou plusieurs fonctions carbonyle (C=O) et éventuellement un ou plusieurs hétéroatomes tel qu'un atome d'oxygène, ledit radical R⁶ présentant de préférence une masse moléculaire moyenne en nombre allant de 100 g/mol à 80000 g/mol,
A, A', A" et A'" représentent, indépendamment les uns des autres, un atome d'oxygène, un atome de soufre, un radical divalent -NH- ou un radical divalent -NR⁸-, de préférence A, A', A" et A‴ représentent chacun un atome d'oxygène dans les formules (IIa), (IIb) ou (IIc), R⁸ représente un radical alkyle linéaire ramifié ou cyclique comprenant de 1 à 18 atomes de carbone, de préférence de 1 à 12 atomes de carbone, de préférence encore de 1 à 6 atomes de carbone,
n est un entier supérieur ou égal à 1 tel que le polyuréthane silylé (A1) présente une masse moléculaire moyenne en nombre Mn(1) telle que définie précédemment,
m est un entier supérieur ou égal à 1 tel que le polyuréthane silylé (A2) présente une masse moléculaire moyenne en nombre Mn(2) telle que définie précédemment,
p est un nombre entier égal à 0, 1 ou 2.

La composition de polyuréthanes silylés selon l'invention peut être utilisée dans diverses compositions, notamment des compositions adhésives présentant en particulier des propriétés auto-adhésives (compositions adhésives de type PSA), telles que celles destinées à la fabrication d'articles auto-adhésifs, ou encore des compositions de revêtement de surface ou de mastic.

Un autre objet de la présente invention concerne une composition adhésive comprenant au moins une composition de polyuréthanes silylés (A) selon la présente invention et au moins un composant additionnel choisi parmi les catalyseurs, les charges, les résines tackifiantes, les promoteurs d'adhésion, les plastifiants ou diluants, les agents rhéologiques, les agents dessicants, les stabilisants U.V. et/ou thermiques (filtres U.V. et anti-oxydants), et les solvants. En particulier, la présente invention concerne une composition adhésive sensible à la pression comprenant au moins une composition de polyuréthanes silylés (A) selon la présente invention, au moins une résine tackifiante et au moins un catalyseur de réticulation.

Un autre objet de la présente invention concerne un article auto-adhésif comprenant une couche support revêtue d'une couche adhésive, ladite couche adhésive étant obtenue par réticulation de la composition adhésive sensible à la pression selon l'invention.

Le procédé de fabrication selon la présente invention permet de fournir une composition de polyuréthanes silylés présentant une vitesse de réticulation élevée.

Le procédé de fabrication selon l'invention permet de fournir une composition de polyuréthanes silylés dont la viscosité est stable dans le temps.

Le procédé de fabrication selon l'invention est plus économique car il nécessite l'utilisation d'une quantité moindre de matières premières coûteuses telles que les silanes.

La composition de polyuréthanes silylés selon l'invention ne comprend pas de monomères résiduels diisocyanate libres, de sorte que les produits comprenant ladite composition de polyuréthanes silylés ne font pas l'objet d'un étiquetage règlementaire dû à la présence de monomères résiduels diisocyanate considérés comme potentiellement toxiques.

### EXPOSE DETAILLE DES MODES DE REALISATION DE L'INVENTION

Dans la présente demande, en l'absence d'indication contraire:
- la viscosité est mesurée à 23°C à l'aide d'un viscosimètre Brookfield RTV, avec une vitesse de rotation de 20 tours/minute et une aiguille 7.
- la masse moléculaire moyenne en nombre des polyuréthanes, des compositions de polyuréthanes ou des résines tackifiantes (exprimée généralement en Dalton) peut être déterminée par des méthodes bien connues de l'homme du métier, par exemple par chromatographie d'exclusion stérique (GPC), en utilisant par exemple un étalon polystyrène.

### Procédé de synthèse des compositions de polyuréthanes silylés

Le procédé de synthèse selon l'invention comprend les étapes séquentielles :
(i) de polyaddition d'au moins un polyol (B) avec au moins un diisocyanate (C), dans laquelle le ratio (r1) du nombre de fonctions NCO sur le nombre total de fonctions OH additionné des fonctions NH et NH₂ éventuellement présentes, est strictement supérieur à 1, de manière à former une composition comprenant au moins un polyuréthane (D) possédant au moins deux fonctions NCO ;
(ii) de réaction de la composition obtenue à l'étape (i) avec au moins un silane (E) choisi parmi les aminosilanes (E1), les mercaptosilanes (E2) et leur mélange, dans laquelle le ratio (r2) du nombre de fonctions NCO sur le nombre de fonctions amine et thiol est strictement supérieur à 1, de manière à former une composition comprenant au moins un polyuréthane (F) possédant au moins une fonction silyle et au moins une fonction NCO et au moins un polyuréthane (F') possédant au moins deux fonctions silylées et exempt de fonctions NCO, et éventuellement au moins un polyuréthane (D) possédant au moins deux fonctions NCO;
(iii) de réaction de la composition obtenue à l'issue de l'étape (ii) avec au moins un composé (G) présentant au moins deux fonctions choisies parmi les fonctions alcool, amine primaire, amine secondaire et thiol, dans laquelle le ratio (r3) du nombre de fonctions NCO sur le nombre de fonctions alcool, amine primaire, amine secondaire et thiol est inférieur ou égal à 1 de sorte à obtenir une composition de polyuréthanes silylés.

Dans la première étape du procédé de synthèse (i), on fait réagir au moins un polyol (B) éventuellement en mélange avec au moins un allongeur(s) de chaîne difonctionnel, avec au moins un diisocyanate (C), dans laquelle le ratio (r1) du nombre de fonctions NCO sur le nombre de fonctions OH (et NH et NH₂ éventuellement présentes), est strictement supérieur à 1, de manière à former un polyuréthane (D) possédant au moins deux fonctions NCO, les fonctions amine de type NH et NH₂ pouvant provenir du (ou des) allongeur(s) de chaîne éventuellement présent(s) dans la composition de polyol (B).

Ainsi, le polyol (B) pouvant être mis en œuvre dans l'étape (i) sous la forme d'une composition comprenant au moins un polyol (B) et au moins un allongeur de chaîne difonctionnel, le ratio (r1) peut s'écrire de la façon suivante : NCO/(OH+NH+NH₂), les fonctions amine de type NH et NH₂ pouvant provenir d'allongeur(s) de chaîne éventuellement présent(s) dans la composition de polyol (B). En l'absence de tel(s) allongeur(s) de chaîne, le ratio (r1) peut s'écrire NCO/OH.

Par allongeur de chaine difonctionnel, on entend un allongeur de chaine possédant deux fonctions choisies indépendamment l'une de l'autre par exemple parmi les fonctions hydroxyles, amines primaires, amines secondaires, chacune des fonctions étant capable de réagir avec un groupe NCO d'un diisocyanate.

Lorsque le polyol (B) est mis en œuvre sous la forme d'une composition comprenant en outre au moins un allongeur de chaîne difonctionnel, celui-ci est choisi de préférence parmi les diols et les polyamines de masse moléculaire comprise entre 60 et 500 g/mol.

A titre d'illustration de tels diols (allongeur de chaîne), on citera l'éthylène glycol, le propylène glycol, le diéthylène glycol, le dipropylène glycol, 3-méthyl-1,5-propanediol, le 1,4-butanediol, le 1,6-hexanediol, le 2-éthyl-1,3-hexanediol, le N,N-bis(2-hydroxy propyl)aniline, le 3-méthyl-1,5-pentanediol.

A titre d'illustration de telles polyamines (allongeur de chaîne), on citera l'éthylène diamine, la diphényl méthane diamine, l'isophorone diamine, l'hexaméthylène diamine, la diéthyltoluène diamine et les polyétheramines.

L'allongeur de chaine est différent des composés (G) définis dans la présente demande.

Le polyol (B) peut être mis en œuvre à l'étape (i), seul ou sous la forme d'une composition de polyol (B) telle que définie ci-dessus.

Le polyol (B) mis en œuvre à l'étape (i) peut être aliphatique ou aromatique. En particulier, le polyol (B) peut être choisi parmi les polyéther polyols, les polyester polyols, les polytétrahydrofuranes et les polyacrylate polyols. De préférence, la masse moléculaire du ou des polyols (B) va de 100 à 30000 g/mol ou de 250 à 12000 g/mol ou encore de 400 à 8000 g/mol, et leur fonctionnalité hydroxyle va de préférence de 2 à 4, de préférence encore de 2 à 3. La fonctionnalité hydroxyle est le nombre moyen de fonctions hydroxyles par mole de polyol. La masse moléculaire indiquée est une masse moléculaire moyenne en nombre (généralement notée Mn) qui peut être déterminée par exemple à partir de l'indice hydroxyle (IOH) et de la fonctionnalité du polyol.

A titre d'exemples de polyéthers polyols aliphatiques, on peut citer les dérivés oxyalkylés (tels que des oxydes d'éthylène, de propylène ou de butylène) de :
- diols (tels que l'éthylène glycol, le propylène glycol, le néopentyl glycol), de
- triols (tels que le glycérol, le triméthylolpropane et l'hexane-1,2,6-triol), ou de
- tétrols (tels que le pentaérythritol).

Ces produits sont largement disponibles dans le commerce.

Selon une variante préférée, le polyol (B) est un polyéther diol ou un mélange de polyéther diols, et notamment un polypropylène glycol.

On choisit, selon une variante de réalisation, le polyol (B) parmi les polypropylènes glycols (ou PPG) de fonctionnalité hydroxyle égale à 2 et de masse moléculaire environ 4000 g/mol. A titre d'exemple d'un tel polyol (B), on peut citer le VORANOL^{®} EP1900 disponible auprès de Dow Chemical.

Selon un mode de réalisation, le polyol (B) que l'on fait réagir lors de l'étape (i) répond à la formule (III):

HO-R²-OH (III)

dans laquelle : R² représente un radical divalent hydrocarboné comprenant éventuellement une ou plusieurs fonctions carbonyle (C=O) et éventuellement un ou plusieurs hétéroatomes tel qu'un atome d'oxygène, ledit polyol (B) présentant de préférence une masse moléculaire moyenne en nombre allant de 100 g/mol à 30000 g/mol, plus particulièrement de 250 g/mol à 12000 g/mol ou encore de 400 g/mol à 8000 g/mol.

Le ou les hétéroatomes peuvent être présents dans la chaîne hydrocarbonée principale ou bien dans des ramifications de la chaîne hydrocarbonée principale.

A titre d'exemple, dans le cas où le polyol (B) est un polypropylène glycol, R² peut représenter le radical divalent suivant : -[CH(CH₃)-CH₂-O-]_{q}CH₂-CH(CH₃)- où q représente un nombre entier qui varie selon la masse moléculaire moyenne en nombre du polypropylène glycol.

Selon un mode de réalisation, le diisocyanate (C) que l'on fait réagir lors de l'étape (i) répond à la formule (IV):

OCN - R¹ - NCO (IV)

dans laquelle : R¹ représente un radical divalent hydrocarboné comprenant de 5 à 15 atomes de carbone qui peut être aromatique ou aliphatique, linéaire, ramifié ou cyclique.

De préférence, R¹ est choisi parmi l'un des radicaux divalents suivants dont les formules ci-dessous font apparaître les 2 valences libres :
a) le radical divalent dérivé de l'isophorone : 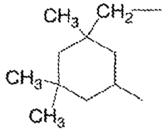
b) le radical dérivé de 4,4'-HMDI : 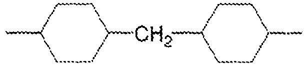
c) le radical divalent dérivé du 2,4-TDI ou du 2,6-TDI : 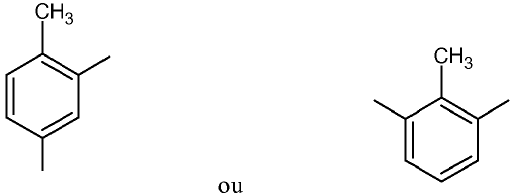
d) le radical divalent dérivé du 2,4'-MDI ou du 4,4'-MDI : 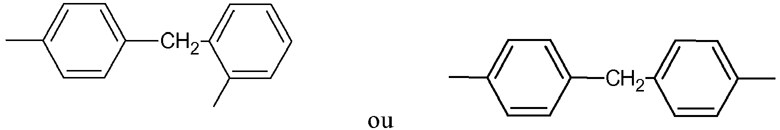
e) le radical divalent -(CH₂)₆- (ou radical hexaméthylène), qui est dérivé de l'hexadiméthylène diisocyanate (HDI),
f) le radical divalent dérivé du xylylène diisocyanate (tel que le m-XDI) :

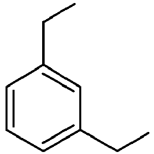

De tels diisocyanates sont couramment disponibles dans le commerce.

Un diisocyanate (C) de formule (IV) dans laquelle R¹ est un radical aromatique peut être utilisé de façon préférentielle, et est particulièrement avantageux le diisocyanate de formule (IV) dans laquelle R¹ est le radical c) divalent dérivé du diisocyanate de toluène (TDI).

Dans la présente étape (i) du procédé selon l'invention, on fait réagir le(s) polyol(s) (B) avec un excès, en termes de groupe fonctionnel équivalent, du(des) diisocyanate(s) (C), afin d'obtenir un ratio (r1) strictement supérieur à 1. Cela signifie que les quantités des 2 réactifs mis en œuvre dans l'étape (i) correspondent à un excès du nombre total équivalent de groupes -NCO (présents dans la quantité d'isocyanate) par rapport au nombre total équivalent de groupes -OH (présents dans la quantité de polyol(s) (B)) augmenté, le cas échéant, du nombre équivalent des groupes -OH, -NH₂, et/ou -NH- présents dans le(s) allongeur(s) de chaîne difonctionnel(s) sus-cité(s).

De préférence, ces quantités correspondent à un rapport équivalent NCO/OH ou NCO/(OH + NH + NH₂) allant de 1,1 à 4, de préférence de 1,5 à 3, préférentiellement de 1,5 à 2,5, avantageusement de 1,7 à 2, par exemple 1,9.

Ledit rapport est défini comme étant égal au nombre total équivalent de fonctions -NCO divisé par le nombre total équivalent de fonctions -OH, -NH₂, et/ou -NH- s'agissant des groupes fonctionnels portés par les quantités correspondantes des deux réactifs, à savoir le (ou les) diisocyanate(s) d'une part et d'autre part la composition consistant en au moins un polyol (B) et, le cas échéant, au moins un allongeur de chaîne difonctionnel. Les quantités pondérales des réactifs à charger dans le réacteur sont déterminées sur la base de ce rapport, ainsi que, s'agissant du(des) polyol(s), sur (leur) son indice d'hydroxyle (IOH), et s'agissant du(des) diamine(s) éventuellement présent(s), sur la base de son (leur) alcalinité totale. L'indice d'hydroxyle (IOH) est le nombre de fonctions hydroxyle par gramme de polyol déterminé par dosage chimique, ledit nombre étant exprimé, en particulier dans le présent texte, sous la forme du nombre équivalent de milligrammes de KOH par gramme de polyol utilisés dans ledit dosage. L'alcalinité totale est le nombre de fonctions aminées primaires et/ou secondaires par gramme de polyamine déterminée par dosage potentiométrique, ladite valeur étant exprimée, en particulier dans le présent texte, sous la forme de milliéquivalents de HCl par gramme de polyamine utilisés dans ledit dosage.

Le nombre de fonctions NCO, le nombre de fonctions OH ainsi que le nombre de fonctions -NH₂ et/ou -NH- sont des données bien connues et accessibles à l'homme du métier.

Le catalyseur éventuellement utilisé à l'étape (i) peut être tout catalyseur connu pour accélérer la vitesse de réaction d'un polyisocyanate sur un polyol. On désignera un tel catalyseur par catalyseur de réaction.

Lorsque le diisocyanate (C) de formule (IV) est tel que R¹ est un radical aliphatique, l'étape (i) est de préférence réalisée en présence d'un catalyseur de réaction choisi par exemple parmi les sels organométalliques tels que les sels ou complexes organométalliques du plomb, du cobalt, du fer, du nickel, du titane, du bismuth, du zinc et de l'étain, comme par exemple le dilaurate de dibutyl étain (ou DBTL), le tétraisopropylate de titane ou les carboxylates de bismuth/zinc.

La réaction de polyaddition de l'étape (i) est de préférence mise en œuvre à une température allant de 50°C à 100°C.

La composition obtenue à l'issue de la réaction de polyaddition de l'étape (i) ne comprend plus d'entités porteuses de fonctions -OH, -NH₂ ou -NH-.

De préférence, la réaction de polyaddition de l'étape (i) permet d'obtenir un pourcentage massique de fonctions NCO allant de 0,5 à 3% en poids, de préférence allant de 1 à 2,5% en poids, préférentiellement de 1% à 2%, avantageusement de 1,5 à 2%, par rapport au poids total de la composition obtenue à l'issue de l'étape (i). L'avancée de la réaction de polyaddition de l'étape (i) peut être suivie par titrage potentiométrique selon des méthodes bien connues de l'homme du métier.

La composition obtenue à l'issue de l'étape (i) (aussi désignée par produit de l'étape (i) ou produit issu de la réaction de l'étape (i)) comprend au moins un polyuréthane (D) possédant au moins deux fonctions NCO, et présentant de préférence une masse moléculaire moyenne en nombre allant de 450 Dalton à 100000 Dalton.

Lors de l'étape (ii), on ajoute un silane (E) à la composition issue de l'étape (i) comprenant au moins un polyuréthane (D) présentant au moins deux fonctions NCO.

Le silane (E) utilisé à l'étape (ii) est choisi parmi les aminosilanes (El) et les mercaptosilanes (E2). Les aminosilanes (El) peuvent être des aminosilanes primaires, i.e. comprenant au moins une fonction amine primaire (-NH2) ou des aminosilanes secondaires, i.e. comprenant au moins une fonction amine secondaire (-NH-). Les mercaptosilanes (E2) présentent de préférence au moins une fonction -SH.

De préférence, le silane (E) comprend un groupement alkoxysilane, tel qu'un groupement de type -Si(R⁴)ₚ(OR⁵)₃₋ₚ où R⁴ et R⁵, identiques ou différents, représentent chacun un radical alkyle linéaire ou ramifié comprenant de 1 à 4 atomes de carbone, deux groupements -OR⁵ pouvant éventuellement être engagés dans un même cycle, et où p représente un nombre entier égal à 0, 1 ou 2, de préférence p étant égal à 0 ou 1.

Ainsi, lors de l'étape (ii), le ratio (r2) du nombre de fonctions NCO sur le nombre de fonctions -NH₂, -NH- et/ou -SH est strictement supérieur à 1, de préférence ledit ratio (r2) va de 1,1 à 5, en particulier de 1,1 à 2,5, préférentiellement de 1,1 à 2, avantageusement de 1,1 à 1,5, par exemple de 1,3 à 1,5. Selon un mode de réalisation préféré, le ratio (r2) est strictement supérieur à 1,1, en particulier strictement supérieur à 1,1 et inférieur à 5, de préférence (r2) est strictement supérieur à 1,2 et inférieur à 5, par exemple (r2) va de 1,3 à 5, avantageusement de 1,3 à 2,5.

Selon un mode de réalisation particulier, lorsque le composé (G) utilisé à l'étape (iii) est difonctionnel (i.e. comprend uniquement deux fonctions choisies parmi les fonctions alcool, amine primaire, amine secondaire et thiol) alors le ratio (r2) va de préférence de 1,1 à 5, en particulier de 1,1 à 2,5, préférentiellement de 1,1 à 2, avantageusement de 1,1 à 1,5, par exemple de 1,3 à 1,5 ; et lorsque le composé (G) utilisé à l'étape (iii) est trifonctionnel (i.e. comprend uniquement trois fonctions choisies parmi les fonctions alcool, amine primaire, amine secondaire et thiol) ou comprend plus de trois fonctions choisies parmi les fonctions alcool, amine primaire, amine secondaire et thiol, alors le ratio (r2) va de préférence de 1,1 à 2,5, préférentiellement de 1,3 à 2,5.

Pour une composition donnée, le nombre de fonctions -NH₂, -NH et/ou -SH est bien connu et accessible à l'homme du métier.

Selon un mode de réalisation, le silane (E) répond à la formule (VI):

X' - R³ - Si(R⁴)ₚ(OR⁵)₃₋ₚ (VI)

dans laquelle :
X' représente un groupement NH₂, NHR⁷ et/ou SH,
R⁷ représente un radical alkyle linéaire, ramifié ou cyclique ayant de 1 à 12 atomes de carbone ou un radical alcényle ayant de 2 à 12 atomes de carbone ou un radical aryle ayant de 6 à 12 atomes de carbone,
R³ représente un radical divalent alkylène linéaire ou ramifié comprenant de 1 à 6 atomes de carbone,
R⁴ et R⁵, identiques ou différents, représentent chacun un radical alkyle linéaire ou ramifié comprenant de 1 à 4 atomes de carbone, deux groupements -OR⁵ pouvant éventuellement être engagés dans un même cycle,
p représente un nombre entier égal à 0, 1 ou 2, de préférence p représente 0 ou 1.

Ainsi, lorsque X' représente NH₂ ou NHR⁷, alors le silane (E) est un aminosilane (El) et lorsque X' représente SH alors le silane (E) est un mercaptosilane (E2).

De préférence, le silane (E) est un aminosilane (El) et plus préférentiellement un aminosilane secondaire, c'est-à-dire un aminosilane à fonction amine secondaire.

A titre d'exemple de composés silane (E) qui peuvent être utilisés lors de l'étape (ii), on peut citer les composés suivants :
- l'aminosilane de formule : H₂N-(CH₂)₃-Si(OCH₃)₃
   disponible auprès de la société Momentive sous la dénomination Silquest^{®} A1110;
- l'aminosilane de formule : nBu-NH-(CH₂)₃-Si(OCH₃)₃
   disponible auprès de la société Evonik sous la dénomination Dynasylan^{®} 1189 ;
- l'aminosilane de formule : CH₃-CH₂-NH-CH₂-CH(CH₃)-CH₂-Si(O CH₃)₃
   disponible auprès de la société Momentive sous la dénomination Silquest^{®} A-link 15 ;
- l'aminosilane de formule : C₆H₁₁-NH-(CH₂)₃-Si(OCH₃)₃ où le groupement C₆H₁₁ représente un groupement cyclohexyle
   disponible auprès de la société Wacker sous la dénomination Geniosil^{®} GF92.

Le produit de l'étape (i) peut comprendre, outre le polyuréthane (D) à terminaisons NCO, une quantité résiduelle de monomère diisocyanate (C) non réagi, allant par exemple jusqu'à 1% en poids du poids dudit produit.

Lors de l'étape (ii), le silane (E) est introduit en une quantité telle que la quantité de fonctions -NH₂, -NH- et -SH est inférieure à la quantité de fonctions NCO dans le produit de l'étape (i). La quantité de fonctions NCO dans le produit de l'étape (i) peut provenir du polyuréthane (D) comprenant au moins deux fonctions NCO, mais également du diisocyanate (C) non réagi.

Le ratio (r2) étant strictement supérieur à 1, la composition obtenue à l'issue de l'étape (ii) (aussi désignée par produit de l'étape (ii) ou produit issu de la réaction de l'étape (ii)) comprend un mélange de polyuréthanes silylés, ledit mélange comprenant au moins un polyuréthane (F) possédant au moins une fonction silylée et au moins une fonction NCO et au moins un polyuréthane (F') possédant au moins deux fonctions silylées et exempt de fonctions NCO. Le polyuréthane (F') correspond à un polyuréthane (D) terminé NCO issu de l'étape (i) dont toutes les fonctions NCO ont réagi avec le silane (E) introduit.

Le produit de l'étape (ii) peut en outre comprendre :
- des quantités résiduelles de monomère diisocyanate (C) non réagi (généralement présent en quantité pondérale minoritaire) et
- des polyuréthanes (D) terminés NCO, c'est-à-dire des polyuréthanes issus de l'étape (i) dont aucune fonction NCO n'a réagi avec le silane (E).

Le polyuréthane (F) possédant au moins une fonction silylée et au moins une fonction NCO présente de préférence une masse moléculaire moyenne en nombre allant de 600 Dalton à 100000 Dalton.

La réaction de l'étape (ii) est de préférence mise en œuvre à une température allant de 50°C à 100°C.

L'étape (iii) consiste à faire réagir la composition obtenue à l'issue de l'étape (ii) avec un composé (G) comprenant au moins deux fonctions choisies parmi les fonctions alcool, amine primaire, amine secondaire et thiol.

Le composé (G) est de préférence liquide à température ambiante (environ 23°C).

La quantité de composé (G) ajoutée à la composition issue de l'étape (ii) est telle que le ratio (r3) du nombre de fonctions NCO sur le nombre de fonctions alcool, amine primaire, amine secondaire, et thiol est inférieur ou égal à 1. De préférence, ce ratio (r3) est en outre supérieur ou égal à 0,6. Plus préférentiellement, ce ratio (r3) va de 0,7 à 1, encore plus préférentiellement de 0,8 à 1, et mieux encore de 0,9 à 1. Un ratio (r3) supérieur à 0,6, en particulier un ratio (r3) qui se rapproche de 1, permet avantageusement d'améliorer la stabilité de la viscosité du produit issu de l'étape (iii).

Ainsi, la composition issue de l'étape (iii) ne comprend plus de fonctions NCO libres, en effet, toutes les fonctions NCO, provenant soit du monomère diisocyanate (C) non réagi soit d'un polyuréthane comprenant au moins une fonction NCO, ont réagi avec les fonctions alcool, amine et/ou thiol du composé (G).

Le composé (G) comprend au moins deux fonctions, identiques ou différentes, de préférence identiques, choisies parmi les fonctions alcool (OH), amine primaire (-NH2), amine secondaire (-NH-) et thiol (-SH). Selon un mode de réalisation, le composé (G) comprend au moins trois fonctions, identiques ou différentes, de préférence identiques, choisies parmi les fonctions alcool, amine primaire, amine secondaire et thiol. Plus préférentiellement, le composé (G) est choisi parmi les polyols et les polyamines possédant au moins deux ou au moins trois fonctions amine choisies parmi les fonctions amine primaire et les fonctions amine secondaire.

Dans le cas où le composé (G) comprend au moins une fonction amine secondaire (-NH-), la fonction amine secondaire peut présenter la formule -NHR⁸ où R⁸ représente un radical alkyle linéaire ramifié ou cyclique comprenant de 1 à 18 atomes de carbone, de préférence de 1 à 12 atomes de carbone, de préférence encore de 1 à 6 atomes de carbone.

Ainsi, le ratio (r3) tient compte de l'ensemble des fonctions susceptibles de réagir avec les fonctions NCO. Ce ratio (r3) peut donc être formulé de la façon suivante :

NCO/{OH+SH+NHR⁸+NH₂}

où: OH représente le nombre de fonctions alcool, déterminé à partir de l'indice hydroxyle (IOH) exprimé en méq/g,
SH représente le nombre de fonctions thiol, déterminé à partir de l'indice de thiol (ISH) exprimé en méq/g,
NHR⁸ représente le nombre de fonctions amine secondaire, déterminé à partir de l'alcalinité totale exprimée en méq/g,
NH₂ représente le nombre de fonctions amine primaire, déterminé à partir de l'alcalinité totale exprimée en méq/g.

Lorsque le composé (G) utilisé lors de l'étape (iii) est un polyol, celui-ci peut être identique ou différent du polyol (B) utilisé lors de l'étape (i). En particulier, il peut être choisi de préférence parmi les polyéther polyols, les polyester polyols, les polycarbonates polyols, les polyisoprènes polyols, les polyacrylates polyols, les polysiloxane polyols, et les polybutadiènes polyols, seuls ou bien leurs mélanges.

Lorsque le composé (G) est choisi parmi les polyamines tels que définis précédemment, celui-ci peut être choisi de préférence parmi les polyéther polyamines et les polysiloxane polyamines correspondants, seuls ou bien leurs mélanges.

Le composé (G) présente de préférence une masse moléculaire moyenne en nombre allant de 100 g/mol à 80000 g/mol, ou de 250 g/mol à 50000 g/mol, ou de 400 à 25000 g/mol, ou de 600 à 20000 g/mol, ou encore de 1100 à 12000 g/mol, voire de 1500 à 10000 g/mol.

Selon un mode de réalisation, le composé (G) peut être est difonctionnel, trifonctionnel ou tétrafonctionnel. Dans ce cas, le composé (G) peut présenter la formule (VIIIa), (VIIIb) ou (VIIIc) : 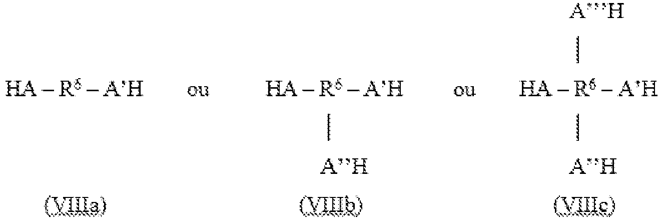 dans laquelle :
A, A', A" et A'" représentent, indépendamment les uns des autres, un atome d'oxygène, un atome de soufre, un radical divalent -NH- ou un radical divalent -NR⁸-, de préférence A et A' sont identiques dans la formule (Villa), A, A' et A" sont identiques dans la formule (VIIIb) et A, A', A" et A'" sont identiques dans la formule (VIIIc),
R⁸ représente un radical alkyle linéaire ramifié ou cyclique comprenant de 1 à 18 atomes de carbone, de préférence de 1 à 12 atomes de carbone, de préférence encore de 1 à 6 atomes de carbone,
R⁶ représente un radical polysiloxane ou un radical hydrocarboné comprenant éventuellement une ou plusieurs fonctions carbonyle (C=O) et éventuellement un ou plusieurs hétéroatomes tel qu'un ou plusieurs atomes d'oxygène. De préférence, R⁶ présente une masse moléculaire moyenne en nombre allant de 100 g/mol à 80000 g/mol, de préférence de 250 g/mol à 50000 g/mol, de préférence encore de 400 à 25000 g/mol, voire de 600 à 20000 g/mol ou de 1100 à 12000 g/mol ou encore de 1500 à 10000 g/mol. Ainsi, dans la formule (Villa), R⁶ est un radical divalent ; dans la formule (VIIIb), R⁶ est un radical trivalent et dans la formule (VIIIc), R⁶ est un radical tétravalent.

De préférence, le composé (G) est choisi parmi les diols, les triols, les tétrols, les diamines primaires (de préférence comprenant deux fonctions -NH2), les triamines primaires (de préférence comprenant trois fonctions -NH2), les diamines secondaires (de préférence comprenant deux fonctions -NH-), les triamines secondaires (i.e. comprenant trois fonctions -NH-), les dithiols et les trithiols. Plus préférentiellement, le composé (G) est choisi parmi les diols et les triols, et mieux encore parmi les diols.

Les diols et triols (G) présentent de préférence une masse moléculaire moyenne en nombre allant de 100 g/mol à 80000 g/mol, de préférence de 250 g/mol à 50000 g/mol, de préférence de 400 à 25000 g/mol, de préférence encore de 600 à 20000 g/mol voire de 1100 à 12000 g/mol ou encore de 1500 à 10000 g/mol.

Selon un mode de réalisation, le composé (G) est un diol répondant à la formule (IX):

HO - R⁶ - OH (IX)

où: R⁶ représente un radical divalent choisi parmi les radicaux polysiloxanes et les radicaux hydrocarbonés comprenant éventuellement une ou plusieurs fonctions carbonyle (C=O) et éventuellement un ou plusieurs hétéroatomes tel que de préférence un ou plusieurs atomes d'oxygène. De préférence, R⁶ est tel que le composé (G) présente une masse moléculaire moyenne en nombre allant de 100 à 80000 g/mol, de préférence de 250 à 50000 g/mol, de préférence encore de 400 à 25000 g/mol, voire de 600 à 20000 g/mol ou de 1100 à 12000 g/mol ou encore de 1500 à 10000 g/mol.

Le ou les hétéroatomes et fonctions carbonyle mentionnés dans les formules définies ci-dessus peuvent être présents dans la chaîne hydrocarbonée principale ou bien dans des ramifications de la chaîne hydrocarbonée principale.

Dans le cas où le diol (G) est un polypropylène glycol, R⁶ peut représenter le radical divalent suivant : -[CH(CH₃)-CH₂-O-]_{q}CH₂-CH(CH₃)-où: q représente un nombre entier qui varie selon la masse moléculaire moyenne en nombre dudit polypropylène glycol.

Le composé (G) peut être utilisé seul ou sous la forme d'un mélange de plusieurs composés (G) choisis parmi ceux définis ci-dessus.

De préférence, la composition de polyuréthanes silylés obtenue à l'issue de l'étape (iii) comprend au moins deux polyuréthanes silylés de masse moléculaire moyenne en nombre différente, dont un premier polyuréthane silylé de masse moléculaire moyenne en nombre Mn'₁ allant de 800 Dalton à 100000 Dalton et un second polyuréthane silylé de masse moléculaire moyenne en nombre Mn'₂ telle que le rapport Mn'₂/Mn'₁ est supérieur ou égal à 2,0, de préférence Mn'₂ étant inférieure ou égale à 200 000 Dalton, et plus préférentiellement Mn'₂ allant de 1600 à 200000 Dalton.

En général, lorsque le composé (G) est choisi parmi les composés difonctionnels, de préférence parmi les diols, le rapport Mn'₂/Mn'₁ est supérieur ou égal à 2,0.

En général, lorsque le composé (G) est choisi parmi les composés trifonctionnels, de préférence parmi les triols, le rapport Mn'₂/Mn'₁ est supérieur ou égal à 3,0.

Selon un mode de réalisation, la composition issue de l'étape (iii) présente une viscosité à 23°C, allant de 20000 à 2000000 mPa.s, ladite viscosité étant de préférence mesurée un jour après fabrication de ladite composition.

La réaction de l'étape (iii) est de préférence mise en œuvre à une température allant de 50°C à 100°C.

La fin de la réaction de l'étape (iii) peut être suivie par analyse infra-rouge en détectant la disparition de la bande correspondant aux fonctions NCO (2300 cm⁻¹).

Le procédé selon l'invention peut comprendre en outre une étape d'introduction d'un ou plusieurs des composés additionnels suivants: un plastifiant ou diluant, un absorbeur d'humidité, un agent stabilisant U.V. et/ou anti-oxydant.

L'ajout de ce(s) composé(s) additionnel(s) peut avoir lieu avant, après ou au cours de l'une quelconque des étapes (i), (ii) ou (iii) du procédé de préparation selon l'invention. En particulier, l'ajout de ce(s) composé(s) additionnel(s) a lieu en fin de synthèse de la composition de polyuréthanes silylés.

Selon un mode de réalisation, le diisocyanate (C) répond à la formule (IV) et le polyol (B) répond à la formule (III) telles que définies ci-dessus. Selon ce mode de réalisation, le produit issu de la réaction de l'étape (i) comprend au moins un polyuréthane (D) répondant à la formule (V): 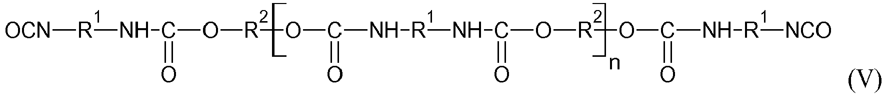 où:
R¹ et R² ont la même signification que ci-dessus et
n est un entier supérieur ou égal à 1 tel que le polyuréthane (D) présente une masse moléculaire moyenne en nombre allant de 450 à 100000 Dalton.

Selon un mode de réalisation, un silane (E) répondant à la formule (VI) telle que définie ci-dessus est ajouté à la composition issue de l'étape (i) comprenant le polyuréthane (D) de formule (V) défini ci-dessus. Selon ce mode de réalisation, la composition issue de la réaction de l'étape (ii) peut comprendre :
- un polyuréthane (F) monosilylé comprenant une fonction alkoxysilyle et une fonction NCO et répondant à la formule (VII): 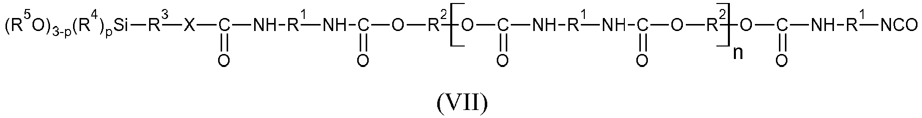
- et un polyuréthane (F') disilylé exempt de fonctions NCO, soit comportant deux fonctions alkoxysilyle, et répondant à la formule (VII') : 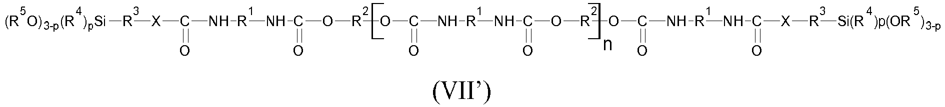 formules dans lesquelles : R¹ provient du diisocyanate (C), R² provient du polyol (B) et X provient du silane (E), X étant un radical divalent correspondant au groupement X' de la formule (VI) défini ci-dessus ayant perdu un atome d'hydrogène de la fonction amine ou thiol, et R³, R⁴, R⁵, p et n sont tels que définis précédemment.

La composition issue de l'étape (ii) peut éventuellement en outre comprendre le polyuréthane (D) de formule (V) qui n'aurait pas réagi, en particulier si le ratio (r2) est élevé, par exemple si le ratio (r2) va de 2,5 à 5.

Selon un mode de réalisation, un composé difonctionnel, trifonctionnel ou tétrafonctionnel (G) répondant à l'une des formules (Villa), (VIIIb) ou (VIIIc) telles que définies ci-dessus est ajouté à la composition issue de l'étape (ii) comprenant les polyuréthanes de formules (VII) et (VII') (et éventuellement de formule (V)). Selon ce mode de réalisation, la composition issue de l'étape (iii) peut comprendre :
- un polyuréthane (A1) disilylé exempt de fonction NCO, soit comportant deux fonctions alkoxysilyle, et répondant à la formule (I) (le polymère de formule (I) étant identique au polymère (F') de formule (VII') défini ci-dessus): 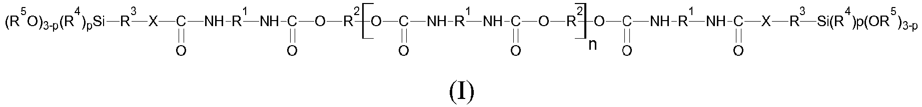 pouvant également être représenté par la formule « schématique » suivante :

   (R⁵O)₃₋ₚ(R⁴)ₚSi-R³-X- Jg- [Lg]ₙ - Mg - X - R³ - Si(R⁴)ₚ(OR⁵)₃₋ₚ (I)
- et un polyuréthane (A2) polysilylé exempt de fonctions NCO et répondant à la formule (IIa), (IIb) ou (IIc):

   (R⁵O)₃₋ₚ(R⁴)ₚSi-R³-X- Jg - [Lg]ₘ - Mg - A - R⁶ - A' - Md - [Ld]ₘ - Jd - X - R³ - Si(R⁴)ₚ(OR⁵)₃₋ₚ (IIa)

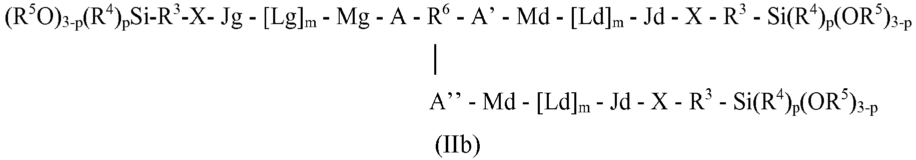

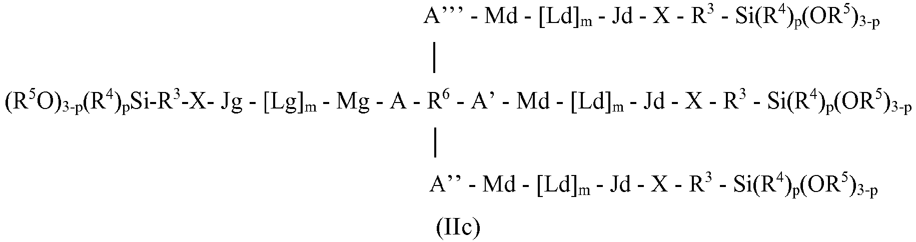

   dans lesquelles :
   Jg représente un groupement de type : 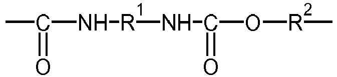
   Lg représente un groupement de type : 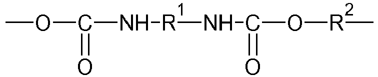
   Mg représente un groupement de type : 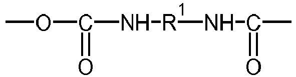
   Jd représente un groupement de type : 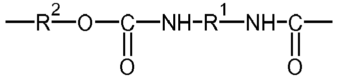
   Ld représente un groupement de type : 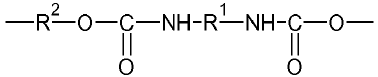
   Md représente un groupement de type : 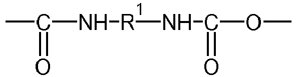
   R¹ représente un radical divalent hydrocarboné comprenant de 5 à 15 atomes de carbone qui peut être aromatique ou aliphatique, linéaire, ramifié ou cyclique,
   R³ représente un radical divalent alkylène linéaire ou ramifié comprenant de 1 à 6 atomes de carbone,
   R² représente un radical divalent hydrocarboné comprenant éventuellement un ou plusieurs hétéroatomes, présentant de préférence une masse moléculaire moyenne en nombre allant de 100 g/mol à 30000 g/mol,
   R⁴ et R⁵, identiques ou différents, représentent chacun un radical alkyle linéaire ou ramifié comprenant de 1 à 4 atomes de carbone, deux groupements -OR⁵ pouvant éventuellement être engagés dans un même cycle,
   X représente un radical divalent choisi parmi -NH-, -NR⁷- ou -S-,
   R⁷ représente un radical alkyle linéaire, ramifié ou cyclique ayant de 1 à 12 atomes de carbone ou un radical alcényle ayant de 2 à 12 atomes de carbone ou un radical aryle ayant de 6 à 12 atomes de carbone,
   R⁶ représente un radical divalent (formule (IIa)), trivalent (formule (IIb)) ou tétravalent (formule (IIc)), choisi parmi les radicaux polysiloxanes et parmi les radicaux hydrocarbonés comprenant éventuellement une ou plusieurs fonctions carbonyle (C=O) et éventuellement un ou plusieurs hétéroatomes, présentant de préférence une masse moléculaire moyenne en nombre allant de 100 g/mol à 80000 g/mol,
   A, A', A" et A'", représentent, indépendamment les uns des autres, un atome d'oxygène, un atome de soufre, un radical divalent -NH- ou un radical divalent -NR⁸-, de préférence A, A', A" et A'" représentent chacun un atome d'oxygène dans les formules (IIa), (IIb) ou (IIc),
   R⁸ représente un radical alkyle linéaire ramifié ou cyclique comprenant de 1 à 18 atomes de carbone, de préférence de 1 à 12 atomes de carbone, de préférence encore de 1 à 6 atomes de carbone,
   n est un entier supérieur ou égal à 1 tel que le polyuréthane (A1) présente une masse moléculaire moyenne en nombre Mn(1) allant de 800 à 100000 Dalton m est un entier supérieur ou égal à 1 tel que le polyuréthane (A2) présente une masse moléculaire moyenne en nombre Mn(2) telle que le rapport Mn(2)/Mn(1) est supérieur ou égale à 2,0,
   p est un nombre entier égal à 0, 1 ou 2, de préférence p représente 0 ou 1.

Bien entendu, lorsque qu'un polymère comprend plusieurs groupement Rⁱ (i allant de 1 à 7), chaque Rⁱ peut être identique ou différent.

De préférence, le polyuréthane (A1) disilylé exempt de fonctions NCO et répondant à la formule (I) obtenu à l'issu de l'étape (iii) présente une masse moléculaire moyenne en nombre Mn(1) allant de 800 à 100000 Dalton, de préférence allant de 1500 à 80000 Dalton, de préférence encore allant de 2500 à 50000 Dalton.

Selon un mode de réalisation, la masse moléculaire moyenne en nombre Mn(2) va de 1600 Dalton à 200000 Dalton, de préférence de 3000 Dalton à 160000 Dalton, de préférence encore de 5000 à 100000 Dalton.

En particulier, lorsque le polymère (A2) exempt de fonctions NCO répond à la formule (IIa) obtenu à l'issu de l'étape (iii), celui-ci présente une masse moléculaire moyenne en nombre Mn(2) telle que le rapport Mn(2)/Mn(1) est supérieur ou égal à 2,0.

En particulier, lorsque le polymère (A2) exempt de fonctions NCO répond à la formule (IIb) ou (IIc) obtenu à l'issu de l'étape (iii), celui-ci présente une masse moléculaire moyenne en nombre Mn(2) telle que le rapport Mn(2)/Mn(1) est supérieur ou égal à 3,0.

De préférence, la composition obtenue à l'issue de l'étape (iii) présente une viscosité à 23°C allant de 20000 à 2 000 000 mPa.s, ladite viscosité étant de préférence mesurée un jour après la préparation de ladite composition.

La composition de polyuréthanes silylés obtenue à l'issue du procédé selon l'invention présente des propriétés spécifiques, notamment grâce à des polyuréthanes silylés présentant une distribution de masse moléculaire moyenne en nombre particulière, qui permet d'obtenir avantageusement des vitesses de réticulation élevées et/ou une bonne stabilité, en particulier une bonne stabilité de la viscosité.

### Composition de polyuréthanes silylés

La présente invention a également pour objet une composition de polyuréthanes silylés (A) comprenant un premier type de polyuréthane silylé (A1) de formule (I) telle que définie ci-dessus et de masse moléculaire moyenne en nombre Mn(1) allant de 800 à 100000 Dalton et un deuxième type de polyuréthane silylé (A2) de formule (IIa), (IIb) ou (IIc) telle que définie ci-dessus et de masse moléculaire moyenne en nombre Mn(2) telle que le rapport Mn(2)/Mn(1) est supérieur ou égal à 2,0, de préférence Mn(2) étant inférieure ou égale à 200000 Dalton, et plus préférentiellement Mn(2) allant de 1600 à 200000 Dalton.

Selon un mode de réalisation, la masse moléculaire moyenne en nombre Mn(1) va de 1500 à 80000 Dalton, de préférence de 2500 à 50000 Dalton.

Selon un mode de réalisation, la masse moléculaire moyenne en nombre Mn(2) va de préférence de 3000 à 160000 Dalton, de préférence encore de 5000 à 100000 Dalton.

En particulier, lorsque le polymère silylé (A2) exempt de fonctions NCO répond à la formule (IIa) obtenu à l'issu de l'étape (iii), celui-ci présente une masse moléculaire moyenne en nombre Mn(2) telle que le rapport Mn(2)/Mn(1) est supérieur ou égal à 2,0.

En particulier, lorsque le polymère silylé (A2) exempt de fonctions NCO répond à la formule (IIb) ou (IIc) obtenu à l'issu de l'étape (iii), celui-ci présente une masse moléculaire moyenne en nombre Mn(2) telle que le rapport Mn(2)/Mn(1) est supérieur ou égal à 3,0.

De préférence, la composition de polyuréthanes silylés présente une viscosité à 23°C allant de 20000 à 2000000 mPa.s, ladite viscosité étant de préférence mesurée un jour après la préparation de ladite composition.

La composition de polyuréthanes silylés selon l'invention est susceptible d'être obtenue par le procédé selon l'invention.

La composition de polyuréthanes silylés selon l'invention peut être obtenue par le procédé selon l'invention, en particulier selon les étapes décrites ci-dessus en faisant réagir un diisocyanate (C) de formule OCN-R¹-NCO et un polyol (B) de formule HO - R² - OH lors de l'étape (i), puis en introduisant un silane (E) de formule X' - R³ - Si(R⁴)ₚ(OR⁵)₃₋ₚ lors de l'étape (ii) suivi de l'ajout, lors de l'étape (iii), d'un composé (G) de formules (VIIIa), (VIIIb) ou (VIIIc) telles que définies précédemment.

### Utilisation de la composition de polyuréthanes silylés selon l'invention

La composition de polyuréthanes silylés selon l'invention peut être utilisée dans diverses compositions, notamment dans des compositions adhésives présentant en particulier des propriétés auto-adhésives (compositions auto-adhésives ou compositions adhésives de type PSA), telles que celles destinées à la fabrication d'articles auto-adhésifs, ou encore dans des compositions de revêtement de surface ou de mastic.

Ainsi, un autre objet de la présente invention concerne une composition (notée composition (P)) comprenant la composition de polyuréthanes silylés selon l'invention et au moins un composant additionnel choisi parmi les catalyseurs, les charges, les résines tackifiantes, les promoteurs d'adhésion, les plastifiants, les agents rhéologiques, les agents dessicants, les stabilisants U.V. et/ou thermiques (filtres U.V. et anti-oxydants), et les solvants. De préférence, la composition (P) comprend au moins un composant additionnel choisi parmi les catalyseurs, les charges et les résines tackifiantes.

Le ou les composants additionnels sont choisis en fonction de l'utilisation de la composition (P).

En particulier, lorsque la composition (P) est destinée à être utilisée en tant que composition auto-adhésive, celle-ci comprend de préférence au moins un composant additionnel choisi parmi les catalyseurs, les charges et les résines tackifiantes.

La composition de polyuréthanes silylés peut représenter de 5 à 85% en poids de la composition adhésive, de préférence de 10 à 70% en poids, de préférence encore de 15 à 60% en poids, avantageusement de 20 à 50% en poids du poids total de la composition (P).

Selon un mode de réalisation, la composition de polyuréthanes silylés représente de préférence de 17 à 85% en poids du poids de la composition (P), notamment lorsque la composition (P) est destinée à être utilisée en tant que composition adhésive, et en particulier en tant que composition adhésive sensible à la pression.

Selon un autre mode de réalisation, la composition de polyuréthanes silylés représente de préférence de 10 à 85% en poids du poids de la composition (P), notamment lorsque la composition (P) est destinée à être utilisée en tant que composition de revêtement de surface ou de mastic.

La composition (P) peut comprendre ou non au moins un catalyseur. Lorsqu'un catalyseur est présent, celui-ci peut représenter de 0,01 à 5% en poids, de préférence de 0,1 à 3% en poids, de préférence encore de 0,5 à 2% en poids du poids total de la composition (P).

Le catalyseur utilisé dans la composition (P) selon l'invention peut être tout catalyseur connu par l'homme du métier pour la condensation de silanol. On désignera un tel catalyseur par catalyseur de réticulation. On peut citer comme exemples de tels catalyseurs des dérivés organiques du titane comme l'acétyl acétonate de titane (disponible commercialement sous la dénomination TYZOR^{®} AA75 auprès de la société DuPont), de l'aluminium comme le chélate d'aluminium (disponible commercialement sous la dénomination K-KAT^{®} 5218 auprès de la société King Industries), des amines comme le 1,8-diazobicyclo (5.4.0) undécène-7 ou DBU.

La composition (P) peut comprendre ou non au moins une résine tackifiante. Lorsqu'au moins une résine tackifiante est présente, la ou les résines tackifiantes peuvent représenter de 1 à 80% en poids, plus préférentiellement de 5 à 50% en poids, et mieux encore de 10 à 30% en poids du poids total de la composition (P).

Selon un mode de réalisation, la ou les résines tackifiantes représentent de préférence de 12 à 80% en poids du poids de la composition (P), notamment lorsque la composition (P) est destinée à être utilisée en tant que composition adhésive, et en particulier en tant que composition adhésive sensible à la pression.

Selon un autre mode de réalisation, la ou les résines tackifiantes représentent de préférence de 1 à 30% en poids du poids de la composition (P), et sont de préférence choisies parmi les résines tackifiantes liquides à température ambiante, notamment lorsque la composition (P) est destinée à être utilisée en tant que composition de revêtement de surface ou de mastic.

De préférence, on choisira une résine tackifiante liquide à température ambiante comme par exemple la Sylvatac^{®} RE 12 qui est une résine de type ester de colophane, disponible auprès de Arizona Chemical.

Selon un mode de réalisation, la résine tackifiante présente une masse moléculaire moyenne en nombre allant de 100 Da à 5 000 Da, de préférence de 500 Da à 4 000 Da.

Selon un mode de réalisation, la résine tackifiante est choisie parmi :
(t1) les résines susceptibles d'être obtenues par polymérisation d'hydrocarbures terpéniques et de phénols, en présence de catalyseurs de Friedel-Crafts,
(t2) les résines susceptibles d'être obtenues par polymérisation d'alpha-méthyl styrène, éventuellement par réaction avec des phénols,
(t3) les colophanes d'origine naturelle ou modifiées, telles que la colophane extraite de la gomme de pins, la colophane de bois extraite des racines de l'arbre et leurs dérivés hydrogénés, dimérisés, polymérisés ou estérifiés par des monoalcools ou des polyols comme le glycérol ou le pentaérythritol,
(t4) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières,
(t5) les résines terpéniques résultant généralement de la polymérisation d'hydrocarbures terpéniques, comme le mono-terpène (ou pinène) en présence de catalyseurs de Friedel-Crafts,
(t6) les copolymères à base de terpènes naturels, par exemple le styrène/terpène, l'alpha-méthyl styrène/terpène et le vinyl toluène/terpène, et
(t7) les résines acryliques.

De telles résines sont disponibles commercialement et parmi celles de type (t1), (t2) et (t3) définis ci-dessus, on peut citer les produits suivants :
- résines de type (t1) : Dertophène^{®} 1510 disponible auprès de la société DRT possédant une masse moléculaire moyenne en nombre Mn d'environ 870 Da ; Dertophène^{®} H150 disponible auprès de la même société de masse moléculaire moyenne en nombre Mn égale à environ 630 Da ; Sylvarez^{®} TP 95 disponible auprès de la société Arizona Chemical ayant une masse moléculaire moyenne en nombre Mn d'environ 1200 Da ;
- résines de type (t2) : Norsolène^{®} W100 disponible auprès de la société Cray Valley, qui est obtenue par polymérisation d'alpha-méthyl styrène sans action de phénols, avec une masse moléculaire moyenne en nombre Mn de 900 Da ; Sylvarez^{®} 510 qui est disponible auprès de la société Arizona Chemical avec une masse moléculaire moyenne en nombre Mn d'environ 1740 Da, dont le procédé d'obtention comprend l'ajout de phénols ;
- résines de type (t3) : Sylvalite^{®} RE 100 qui est un ester de colophane et de pentaérythritol disponible auprès de la société Arizona Chemical et de masse moléculaire moyenne en nombre Mn environ 1700 Da.

La composition (P) selon l'invention peut comprendre ou non des charges, lesdites charges pouvant être des charges inorganiques, des charges organiques ou un mélange de charges inorganiques et organiques.

Les charges inorganiques peuvent être choisies parmi les carbonates de calcium, les polycarbonates de calcium, l'hydroxyde d'aluminium, les talcs, les kaolins, le noir de carbone, les silices et fumée de silice, le quartz, les billes de verre.

Les charges organiques peuvent être choisies parmi le polychlorure de vinyle, le polyéthylène, le polyamide, des résines de styrène-butadiène, ou tout autre polymère organique sous forme de poudre.

De préférence, les charges présentent une taille de particules allant de 0,010 à 20 µm, de préférence allant de 0,020 à 15 µm, de préférence encore allant de 0,030 à 5 µm, mesurable par exemple par granulométrie laser.

Les charges peuvent assurer différentes fonctions au sein de la composition (P), par exemple une fonction d'agent rhéologique.

Les charges peuvent représenter jusqu'à 80% en poids, de préférence de 20 à 70% en poids, plus préférentiellement de 30 à 60% en poids, du poids total de la composition (P).

Des additifs peuvent être prévus pour ajuster la rhéologie de la composition (P) selon les contraintes d'application (agents rhéologiques). Par exemple, un agent rhéologique augmentant le seuil d'écoulement peut être ajouté afin d'éviter les coulures lors de l'application de la composition (P), en particulier lorsque la surface recevant la couche de composition (P) n'est pas horizontale.

Le ou les agents rhéologiques peuvent représenter de 0,01 à 8% en poids, de préférence de 0,05 à 6% en poids, et plus préférentiellement de 0,1 à 5% en poids, du poids total de la composition (P).

La composition (P) selon l'invention peut comprendre ou non au moins un plastifiant. Lorsqu'il est présent, le plastifiant peut par exemple être choisi parmi les esters de l'acide benzoïque, l'acide phtalique, l'acide trimellitique, l'acide pyromellitique, l'acide adipique, l'acide sébacique, l'acide fumarique, l'acide maléique, l'acide itaconique ou l'acide citrique ou parmi les dérivés de polyester, de polyéther, de l'huile minérale d'hydrocarbures. Parmi les esters de l'acide phtalique, on peut citer les phtalates, tels que le phtalate de dibutyle, le phtalate de dioctyle, le phtalate de dicyclohexyle, le phtalate de diisooctyle, le phtalate de diisodécyle, le phtalate de dibenzyle ou le phtalate de butylbenzyle. Si le plastifiant est présent, il est choisi de préférence parmi les phtalates, les sébaçates, les adipates et les benzoates.

Le plastifiant doit être compatible avec la composition de polyuréthanes silylés selon l'invention et ne pas démixer dans la composition (P). Le plastifiant permet d'augmenter la plasticité (élongation) de la composition (P) et de diminuer sa viscosité.

La teneur en plastifiant(s) est de préférence inférieure ou égale à 30% en poids, et plus préférentiellement inférieure ou égale à 15% en poids, par rapport au poids total de la composition (P). En particulier, lorsqu'au moins un plastifiant est présent, celui-ci peut représenter de 0,1 à 30% en poids, et de préférence de 0,5 à 15% en poids, du poids total de la composition (P).

La composition (P) selon l'invention peut comprendre ou non au moins un agent dessicant. Lorsqu'au moins un agent dessicant est présent, celui-ci peut être choisi parmi le vinyltriméthoxysilane (VTMO) tel que le Silquest^{®} A171 disponible auprès de la Société MOMENTIVE, le vinyltriéthoxysilane (VTEO) tel que le GENIOSIL^{®} GF 56 disponible auprès de la Société WACKER ou les alkoxyarylsilanes tel que le GENIOSIL^{®} XL 70 disponible auprès de la Société WACKER.

La teneur en agent(s) dessicant(s) est de préférence inférieure ou égale à 3% en poids, et plus préférentiellement inférieure ou égale à 2% en poids, par rapport au poids total de la composition (P). En particulier, lorsqu'au moins un agent dessicant est présent, celui-ci peut représenter de 0,5 à 3% en poids, et de préférence de 1 à 2% en poids, du poids total de la composition (P).

Des stabilisants U.V. et/ou thermiques peuvent être ajoutés dans la composition (P) afin de prévenir (ralentir ou empêcher) une dégradation des polymères silylés et conduire à une meilleure tenue aux U.V. ou aux chocs thermiques. On citera à titre d'exemples, des filtres U.V. et anti-oxydants, tels que le TINUVIN^{®} 123, le TINUVIN^{®} 326 ou l'IRGANOX^{®} 245 disponibles auprès de la société BASF.

La composition (P) selon l'invention peut comprendre ou non au moins un promoteur d'adhésion.

Comme exemple de promoteur d'adhésion pouvant être utilisé dans la composition (P) selon l'invention, on peut citer les aminosilanes.

Selon un mode de réalisation, la composition (P) est substantiellement exempte de solvant. De préférence, la composition (P) ne comprend pas de solvant.

La composition (P) selon l'invention peut être préparée par mélange de la composition de polyuréthanes silylés selon l'invention avec le ou les composants additionnels à une température allant de 10°C à 90°C. Lorsque des charges et au moins un catalyseur sont présents dans la composition (P) selon l'invention, le ou les catalyseurs sont de préférence ajouté(s) dans une seconde étape, après le mélange du ou des polyuréthanes silylés et des charges. Le ou les autres composants additionnels éventuellement présents sont introduits conformément aux usages habituels.

La composition (P) n'est pas réticulée avant son utilisation, par exemple par application sur un support. La composition (P) selon l'invention est appliquée dans des conditions permettant sa réticulation. La réticulation de la composition (P) a pour effet la création, entre les chaines polymériques des polyuréthanes silylés utilisés selon l'invention, sous l'action contrôlée ou non de l'humidité et de la température, de liaisons de type siloxane qui conduisent à la formation d'un réseau polymérique tri-dimensionnel.

Selon un mode de réalisation, lorsque la composition (P) selon l'invention est une composition de mastic ou une composition de revêtement de surface, elle est stockée en pot de préférence dans une cartouche étanche à l'abri de l'air et en particulier de l'humidité atmosphérique. Ainsi, un procédé de mise en oeuvre d'une telle composition comprend l'application de la composition (P) selon l'invention sur une surface suivie de la réticulation de ladite composition (P).

La réticulation de la composition (P) selon l'invention est favorisée par l'humidité, en particulier par l'humidité atmosphérique.

La composition (P) selon l'invention peut ainsi être appliquée sur tous types de surface, tels que béton, carrelages, plâtre, bois, plastiques pouvant être sous forme de films, métaux de diverses natures, etc...

### Article

Un autre objet de la présente demande concerne un article comprenant au moins une couche support et au moins une couche obtenue par réticulation de la composition (P) selon l'invention.

Selon un mode de réalisation, la couche support peut être une couche support permanent ou bien une couche support provisoire également dénommée une couche protectrice anti-adhérente (« release liner » en anglais).

Selon un mode de réalisation préféré, l'article selon l'invention est un article auto-adhésif comprenant au moins une couche support et au moins une couche adhésive obtenue par réticulation d'une composition adhésive sensible à la pression (P) selon l'invention comprenant au moins une composition de polymères selon l'invention, au moins une résine tackifiante et au moins un catalyseur de réticulation.

La résine tackifiante et le catalyseur de réticulation peuvent être tels que décrits précédemment.

La composition adhésive sensible à la pression utilisée pour la formulation de l'article auto-adhésif selon l'invention comprend de préférence, et est en particulier constituée :
- de 17 à 85% en poids, de préférence de 27 à 75% en poids, de préférence encore de 37 à 65% en poids, de la composition de polyuréthanes silylés selon l'invention,
- de 12% à 80%, de préférence de 22 à 70%, de préférence de 32 à 60%, en poids de résine(s) tackifiante(s), et
- de 0,01 à 5 % en poids de catalyseur(s) de réticulation,
- éventuellement de 0,1 à 20%, de préférence de 0,5 à 10%, de préférence encore de 1 à 3% en poids, de composant(s) additionnel(s) choisi(s) parmi des promoteurs d'adhésion des plastifiants ou diluants, des agents rhéologiques, des agents dessicants, des stabilisants U.V. et/ou thermiques, et des solvants, de préférence parmi des stabilisants U.V. et/ou thermiques, des plastifiants ou diluants, des agents dessicants, et des solvants,
par rapport au poids total de la composition adhésive.

La couche support peut être du papier ou un film d'un matériau polymérique à une ou plusieurs couches.

La couche support selon l'invention peut également être traitée par tous types de traitement de surface, tel qu'un traitement corona permettant notamment d'augmenter la mouillabilité.

Selon un mode de réalisation, la couche support peut être une couche support permanent ou bien une couche support provisoire également dénommée une couche protectrice anti-adhérente (« release liner » en anglais). Ainsi, la couche support provisoire est destinée à être retirée avant utilisation (collage) de l'article auto-adhésif.

La couche support peut être recouverte sur une de ses deux faces par une couche protectrice anti-adhérente, par exemple par une feuille de papier siliconée ou un film plastique siliconé. En particulier, la couche support peut être recouverte sur la face arrière qui n'est pas revêtue de la couche adhésive par une couche protectrice anti-adhérente. De cette façon, l'article auto-adhésif peut être enroulé sur lui-même puis déroulé sans problème grâce à l'absence d'adhésion de la couche adhésive sur la face siliconée.

Selon un mode de réalisation, l'article, de préférence auto-adhésif, selon l'invention peut être préparé par un procédé comprenant les étapes suivantes :
(a) le conditionnement de la composition (P), de préférence de type PSA, selon l'invention à une température allant de 20 à 160°C ; puis
(b) l'enduction par la composition (P) obtenue à l'étape (a) d'une surface porteuse ; puis
(c) la réticulation de la composition (P) enduite, par chauffage de la surface porteuse enduite à une température allant de 20 à 200°C sous atmosphère humide ;
éventuellement :
(d) le contre collage ou le transfert de la couche de composition (P) réticulée sur une couche support ou sur un film protecteur, de préférence anti-adhérent.

Par « surface porteuse » au sens de la présente invention, il faut comprendre soit un convoyeur à bande recouvert d'une couche anti-adhérente soit une couche support.

Dans le cas où la composition (P) est une composition adhésive sensible à la pression (PSA) et la surface porteuse est un convoyeur à bande, le procédé d'obtention de l'article auto-adhésif selon l'invention comprend à l'étape (d) le transfert de la couche adhésive réticulée sur une couche support.

Dans le cas où la composition (P) est une composition adhésive sensible à la pression (PSA) et la surface porteuse est une couche support permanent, le procédé d'obtention de l'article auto-adhésif selon l'invention peut comprendre à l'étape (d) le contre collage de la couche adhésive sur une couche protectrice anti-adhérente.

Selon le mode de réalisation préféré dans lequel la composition (P) est une composition adhésive sensible à la pression (PSA), le procédé de fabrication de l'article auto-adhésif selon l'invention comprend en outre une étape (e) d'enduction d'une seconde couche de composition adhésive sur la couche support suivie d'une étape (f) de réticulation de la composition adhésive enduite à l'étape (e) par chauffage à une température allant de 20 à 200°C sous atmosphère humide. Selon ce mode de réalisation, un article auto-adhésif double face est obtenu.

L'étape (b) d'enduction peut être réalisée au moyen de dispositifs d'enduction connus, comme par exemple une buse à lèvre ou de type rideau, ou encore au rouleau. Elle peut mettre en œuvre un grammage de composition adhésive à l'état réticulé allant de 3 à 2000 g/m², de préférence de 5 à 500 g/m², de préférence encore de 10 à 250 g/m².

De préférence, l'enduction est réalisée uniformément sur la couche support ou sur la couche protectrice anti-adhérente mais l'enduction peut également être adaptée à la forme souhaitée de l'article (auto-adhésif) final.

Selon un mode de réalisation, l'enduction par la composition (P) est réalisée sur au moins une partie des deux faces de la couche support. Si les deux faces de la couche support sont enduites, la composition (P) peut être identique ou différente sur les deux faces, et le grammage peut être identique ou différent sur les deux faces.

Selon un mode de réalisation, la composition (P) enduite est en outre soumise, lors de l'étape (c) à un traitement dans une atmosphère humide caractérisée par son niveau d'humidité. De préférence, l'atmosphère humide est une atmosphère dans laquelle de 2 à 100% des molécules sont des molécules d'eau, de préférence de 4 à 50%, de préférence encore de 5 à 10% des molécules sont des molécules d'eau.

Le taux d'humidité est exprimé en pourcentage d'eau par unité de volume, ce qui correspond au nombre de molécules d'eau divisé par le nombre total de molécules dans une unité de volume. Grâce à la nature linéaire de cette échelle, le taux d'humidité est facilement mesuré et contrôlé en utilisant par exemple des moniteurs de type P.I.D (« Proportional-Integral-Derivative »). Le pourcentage en poids peut être calculé en multipliant le pourcentage du nombre de molécules d'eau par rapport au nombre total de molécules par un facteur de 0,622. Des informations générales sur le taux d'humidité dans divers environnements sont décrites par W. Wagner et al., dans "International Steam Tables - Properties of Water and Steam based on the Industrial Formulation IAPWS-IF97".

Le temps nécessaire à la réticulation de l'étape (c) peut varier dans de larges limites, par exemple entre 1 seconde et 30 minutes, en fonction du grammage de composition adhésive déposé sur la surface porteuse, de la température de chauffage, et de l'humidité.

Cette étape de réticulation thermique a pour effet la création - entre les chaînes polymériques de la composition de polymères selon l'invention et sous l'action de l'humidité - des liaisons de type siloxane qui conduisent à la formation d'un réseau polymérique tridimensionnel.

Dans le cas où la composition (P) est une composition PSA, la composition (P) ainsi réticulée est un adhésif sensible à la pression qui confère à la couche support qui en est revêtue le pouvoir adhésif et le tack désirés.

Selon un mode de réalisation de l'invention, l'article auto-adhésif comprend de préférence une couche adhésive sur au moins une partie d'une face ou des deux faces de la couche support, ladite ou lesdites couches adhésives étant éventuellement revêtues d'une couche protectrice anti-adhérente. Selon un mode de réalisation, l'article auto-adhésif comprend deux couches protectrices anti-adhérentes sur chacune des deux couches adhésives. Dans ce cas, les deux couches protectrices peuvent être en matériaux identiques ou différents et/ou elles peuvent avoir une épaisseur identique ou différente.

L'article auto-adhésif selon l'invention peut être utilisé dans une méthode de collage comprenant les étapes suivantes :
a) retirer le film protecteur anti-adhérent, lorsqu'un tel film est présent ;
b) appliquer l'article sur une surface ; et
c) appliquer une pression sur ledit article.

### EXEMPLES

Les ingrédients suivants ont été utilisés dans les exemples :
- Voranol^{®} EP1900, disponible auprès de Dow Chemical : polypropylène glycol (de type diol) de masse moléculaire moyenne en nombre de 3938 g/mol, un indice hydroxyle IOH de 28,5 mgKOH/g;
- Scuranate^{®} TX, disponible auprès de Vencorex Chemicals : mélange de 2,4-toluène diisocyanate et de 2,6-toluène diisocyanate présentant un %NCO = 48,1 % (i.e. titrant à 48,1% poids/poids en groupe -NCO) et M = 176 g/mol ;
- IPDI (isophorone diisocyanate) présentant un %NCO = 37,6 % (i.e. titrant à 37,6% poids/poids en groupe -NCO) et M = 222,3 g/mol, disponible par exemple auprès d'Evonik ;
- Irganox^{®} 245, disponible auprès de BASF : antioxydant de type phénol encombré ;
- Borchi KAT^{®} 0761, disponible auprès de Borchers : catalyseur à base de néodécanoate de zinc ;
- Borchi KAT^{®} VP0244, disponible auprès de Borchers : catalyseur à base de néodécanoate de bismuth et de zinc ;
- Silquest^{®} A1110, disponible auprès de Momentive : aminosilane, présentant une fonction amine primaire, de formule H₂N-(CH₂)₃-Si(OMe)₃ ; M = 179,3 g/mol
- Dynasylan^{®} 1189, disponible auprès d'Evonik: aminosilane, présentant une fonction amine secondaire, de formule nBu-NH-(CH₂)₃- Si(OMe)₃ (nBu représente un radical butyle linéaire) ; M = 235 g/mol ;
- Voranol^{®} P2000, disponible auprès de Dow Chemical : polypropylène glycol (de type diol) de masse moléculaire moyenne en nombre de 2000 g/mol, un indice hydroxyle IOH de 56 mgKOH/g ;
- Voranol^{®} P400, disponible auprès de Dow Chemical : polypropylène glycol (de type diol) de masse moléculaire moyenne en nombre de 400 g/mol, un indice hydroxyle IOH de 264 mgKOH/g;
- PPG 400, disponible auprès de Aldrich : polypropylène glycol (de type monoalcool) de masse moléculaire moyenne en nombre de 340 g/mol, un indice hydroxyle IOH de 165 mgKOH/g ;
- Desmophen^{®} 4042 BT, disponible auprès de Covestro : polypropylène glycol (de type triol) de masse moléculaire moyenne en nombre de 4000 g/mol, un indice hydroxyle IOH de 44 mgKOH/g ;
- K-KAT^{®} 5218, auprès de la société King Industries: catalyseur de type chélate d'aluminium ;
- Dertophene^{®} H150, disponible auprès de DRT : résine tackifiante de type terpène phénolique ;
- Irganox^{®} 1010, disponible auprès de BASF : antioxydant de type phénol encombré.

### Ex. 1 : Synthèse des polyuréthanes silylés comparatifs

### 1.1 Polyuréthane silylé Ref.1

Ce polymère est préparé par le procédé décrit ci-dessous dans lequel le ratio (r2) NCO/NH₂ lors de l'étape d'addition d'un silane, de type aminosilane, vaut 1, de sorte que 100% de fonctions NCO réagissent avec les fonctions amine de l'aminosilane lors de l'étape (ii). A l'issue de l'étape (ii), le produit ne comprend plus de fonctions NCO.

Dans un réacteur fermé de 250 ml, équipé d'une agitation, de moyens de chauffe, d'un thermomètre et relié à une pompe à vide, on introduit 85,71 g (42,78 mmoles) de polyéther polyol Voranol^{®} EP1900, et 0,5 g d'anti-oxydant Irganox^{®} 245. L'ensemble est chauffé à 85°C et maintenu à pression réduite de 20 mbar pendant 1 heure pour permettre la déshydratation. Puis sont introduits dans le réacteur sous flux d'azote 30mg de catalyseur Borchi KAT^{®} VP0244 et 7,02 g (80,39 mmoles) de diisocyanate (Scuranate^{®} TX), les quantités introduites correspondent ainsi à un ratio (r1) NCO/OH égal à 1,88. La réaction de polyaddition est poursuivie pendant 2h30 jusqu'à la consommation complète des fonctions OH par les fonctions NCO. Il reste environ 37,61 mmoles de NCO en excès.

Puis est ajouté sous flux d'azote 6,74 g (37,61 mmoles) de l'aminosilane Silquest^{®} A-1110 correspondant à un ratio (r2) NH₂/NCO égal à 1 (correspondant à un greffage de 100% molaire des fonctions NCO par les fonctions NH₂ de l'aminosilane). La réaction de polyaddition est poursuivie pendant 1h jusqu'à la consommation complète des fonctions NCO par les fonctions NH₂ (détectée par la disparition de la bande -NCO à 2300cm⁻¹ en Infra-rouge).

La viscosité à 23°C de la composition obtenue à l'issue du procédé de synthèse comprenant un polyuréthane silylé est de 324 Pa.s.

### 1.2 Composition de polyuréthanes silylés Ref.2

Cette composition de polyuréthanes silylés est préparée par le procédé décrit ci-dessous dans lequel lors de l'étape (iii), un monol (monoalcool) est ajouté.

Dans un réacteur fermé de 250 ml, équipé d'une agitation, de moyens de chauffe, d'un thermomètre et relié à une pompe à vide, on introduit 82,81 g (41,32 mmoles) de polyéther polyol Voranol^{®} EP1900, et 0,5 g d'anti-oxydant Irganox^{®} 245. L'ensemble est chauffé à 85°C et maintenu à pression réduite de 20 mbar pendant 1 heure pour permettre la déshydratation. Puis sont introduits dans le réacteur sous flux d'azote 0,1g de catalyseur Borchi KAT^{®} 0761 et 8,77 g (78,62 mmoles) d'IPDI, les quantités introduites correspondent ainsi à un ratio (r1) NCO/OH égal à 1,90. La réaction de polyaddition est poursuivie pendant 2h30 jusqu'à la consommation complète des fonctions OH par les fonctions NCO.

Puis est ajouté sous flux d'azote 5,42 g (30,23 mmoles) de l'aminosilane Silquest^{®} A-1110 correspondant à un ratio (r2) NH₂/NCO égal à 0,81 (correspondant à un greffage de 81% molaire des fonctions NCO par les fonctions NH₂ de l'aminosilane). Le réacteur est alors maintenu à pression réduite de 20 mbar à 85 °C pendant 1 heure jusqu'à réaction complète de greffage. Puis enfin, on introduit dans cette dernière étape 2,40 g (7,06 mmoles) de polyéther monol (PPG 400 de Aldrich) pour greffer à la stoechiométrie et se placer à un ratio (r3) NCO/OH égal à 1. La réaction de polyaddition est poursuivie pendant 1h jusqu'à la consommation complète des fonctions NCO par les fonctions OH (détectée par la disparition de la bande -NCO à 2300cm⁻¹ en Infra-rouge).

La viscosité à 23°C de la composition obtenue à l'issue du procédé de synthèse comprenant un mélange de polyuréthanes silylés est de 124 Pa.s.

Le tableau 1 indique la nature et la quantité des ingrédients pour les 2 exemples comparatifs Ref.1 et Ref.2. La quantité des ingrédients est exprimée en pourcentage en poids par rapport au poids total de la composition de polyuréthane(s) silylé(s) obtenue à l'issue du procédé de synthèse.

Dans le tableau 1, les différentes étapes séquentielles du procédé ont été distinguées par les étapes (i), (ii) et le cas échéant (iii), avec l'indication du ratio (r1), du ratio (r2) et le cas échéant du ratio (r3), lesdits ratios étant tels que définis dans la présente demande.

Dans le tableau 1, le %NCO désigne le pourcentage en poids de fonctions NCO par rapport au poids total de la composition issue de l'étape (i).

**Tableau 1 : Comparatifs Ref.1 et Ref.2**

| | | Ref.1 | Ref.2 |
|---|---|---|---|
| étape (i) | Voranol^{®} EP1900 | 85,71 | 82,81 |
| | IPDI | - | 8,77 |
| | Scuranate^{®} TX | 7,02 | - |
| | Irganox^{®} 245 | 0,50 | 0,50 |
| | Borchi KAT^{®} 0761 | - | 0,10 |
| | Borchi KAT^{®} VP0244 | 0,03 | - |
| | ratio molaire (r1) NCO/OH | 1,9 | 1,9 |
| | %NCO | 1,7 | 1,7 |
| étape (ii) | Silquest^{®} A1110 | 6,74 | 5,42 |
| | ratio molaire (r2) NCO/NH₂ | 1,0 | 1,3 |
| étape (iii) | PPG 400 | - | 2,40 |
| | ratio molaire (r3) NCO/OH | - | 1,0 |

### Ex. 2 : Synthèse des polyuréthanes silylés selon l'invention

### 2.1 Composition de polyuréthanes silylés C1 selon l'invention

Une composition de polyuréthanes silylés C1 selon l'invention est préparée selon le protocole suivant :
Dans un réacteur fermé de 250 ml, équipé d'une agitation, de moyens de chauffe, d'un thermomètre et relié à une pompe à vide, on introduit 73,05 g (36,46 mmoles) de polyéther polyol Voranol^{®} EP1900, et 0,5 g d'anti-oxydant Irganox^{®} 245. L'ensemble est chauffé à 85 °C et maintenu à pression réduite de 20 mbar pendant 1 heure pour permettre la déshydratation. Puis sont introduits dans le réacteur sous flux d'azote 30mg de catalyseur Borchi KAT^{®} VP0244 et 5,98 g (68,48 mmoles) de diisocyanate (Scuranate^{®} TX), les quantités introduites correspondent ainsi à un ratio (r1) NCO/OH égal à 1,88. La réaction de polyaddition est poursuivie pendant 2h30 jusqu'à la consommation complète des fonctions OH par les fonctions NCO.

Puis est ajouté sous flux d'azote 4,34 g (24,05 mmoles) de l'aminosilane silquest^{®} A1110 correspondant à un ratio amine/NCO égal à 0,75 (correspondant à un greffage de 75% molaire des fonctions NCO par les fonctions amine de l'aminosilane), i.e. un ratio (r2) NCO/amine de 1,3. La réaction de polyaddition est poursuivie pendant 1h jusqu'à la consommation complète des fonctions NCO par les fonctions amine.

La dernière étape consiste à viser un ratio (r3) NCO/OH égale à 1 en greffant les 25 % molaire de fonctions résiduelles NCO par les fonctions OH du polyéther polyol en ajoutant 16,10 g (8,036 mmoles) de polyéther polyol Voranol^{®} EP1900. Le réacteur est alors maintenu à pression réduite de 20 mbar à 85 °C pendant 1 heure jusqu'à réaction complète (consommation complète des fonctions NCO par les fonctions OH détectée par la disparition de la bande -NCO à 2300cm⁻¹ en Infra-rouge).

La viscosité à 23°C de la composition obtenue à l'issue du procédé de synthèse comprenant un mélange de polyuréthanes silylés est de 290 Pa.s.

### 2.2 Compositions de polyuréthanes silylés C2 à C10 selon l'invention

Des compositions de polyuréthanes silylés C2 à C10 selon l'invention ont été préparées selon un protocole similaire à celui de la composition C1.

La nature et la quantité des ingrédients des compositions C1 à C10 sont données dans le tableau 2 ci-dessous. La quantité des ingrédients est exprimée en pourcentage en poids par rapport au poids total de la composition de polyuréthanes silylés obtenue à l'issue du procédé de synthèse.

Dans le tableau 2, les différentes étapes séquentielles du procédé ont été distinguées par les étapes (i), (ii) et (iii), avec l'indication du ratio (r1), du ratio (r2) et du ratio (r3), lesdits ratios étant tels que définis dans la présente demande.

Dans le tableau 2, le %NCO désigne le pourcentage en poids de fonctions NCO par rapport au poids total de la composition issue de l'étape (i).

**Tableau 2 : Compositions C1 à C10 selon l'invention (en pourcentage massique)**

| | | C1 | C2 | C3 | C4 | C5 | C6 | C7 | C8 | C9 | C10 |
|---|---|---|---|---|---|---|---|---|---|---|---|
| étape (i) | Voranol^{®} EP1900 | 73,05 | 85,46 | 60,51 | 72,16 | 67,32 | 58,08 | 78,29 | 75,51 | 74,09 | 77,97 |
| | Scuranate^{®} TX | 5,98 | 7,00 | 5,00 | 5,91 | 5,51 | 4,76 | 6,42 | 6,18 | - | 6,38 |
| | IPDI | - | - | - | - | - | - | - | - | 7,85 | - |
| | Irganox^{®} 245 | 0,50 | 0,50 | 0,50 | 0,50 | 0,50 | 0,50 | 0,50 | 0,50 | 0,45 | 0,50 |
| | Borchi KAT^{®} 0761 | - | - | - | - | - 0761 | - | - | - | 0,09 | - |
| | Borchi KAT^{®} VP0244 | 0,03 | 0,03 | 0,03 | 0,03 | 0,03 | 0,03 | 0,03 | 0,03 | - | 0,03 |
| | ratio (r1) NCO/OH | 1,9 | 1,9 | 1,9 | 1,9 | 1,9 | 1,9 | 1,9 | 1,9 | 1,9 | 1,9 |
| | %NCO | 1,7 | 1,7 | 1,7 | 1,7 | 1,7 | 1,7 | 1,7 | 1,7 | 1,7 | 1,7 |
| étape (ii) | Silquest^{®} A1110 | 4,34 | 5,10 | - | - | - | - | - | - | 4,85 | - |
| | Dynasylan^{®} 1189 | - | - | 2,51 | 5,61 | 5,24 | 4,52 | 6,09 | 5,87 | - | 6,46 |
| | ratio (r2) NCO/amine | 1,3 | 1,3 | 2,5 | 1,3 | 1,3 | 1,3 | 1,3 | 1,3 | 1,2 | 1,3 |
| étape (iii) | Voranol^{®} EP1900 | 16,10 | - | 31,59 | 15,79 | 21,40 | 32,11 | - | - | 12,67 | - |
| | Voranol^{®} P2000 | - | - | - | - | - | - | 8,67 | 11,91 | - | - |
| | Voranol^{®} P400 | - | 1,91 | - | - | - | - | - | - | - | - |
| | Desmophen^{®} 4042 BT | - | - | - | - | - | - | - | - | - | 8,66 |
| | ratio (r3) NCO/OH | 1,0 | 1,0 | 1,0 | 1,0 | 0,7 | 0,4 | 1,0 | 0,7 | 1,0 | 1,0 |

### Ex. 3 : Evaluation des performances des compositions de polyuréthane(s) silylé(s) préparées Mesure du temps de réticulation, aussi appelé temps de formation de peau (en anglais « skinning time »)

Pour chacune des compositions (Ref.1, Ref.2 et C1 à C10), le temps de formation d'une peau à la surface d'un film à 120 °C dans une salle climatisée à 23°C et 50% +/- 5% d'humidité relative est mesuré selon la méthode suivante.

On réalise dans un premier temps une mesure approximative du temps de formation de peau. Pour cela :
- On préchauffe une plaque chauffante à 120°C (± 5°C) au minimum 30 minutes avant utilisation.
- On pèse un échantillon de 5 g constitué à 98% en poids de la composition de polyuréthane(s) silylé(s) à tester et à 2% en poids de catalyseur de réticulation K-KAT^{®} 5218 par rapport au poids total dudit échantillon dans une coupelle aluminium.
- On vérifie que la température de surface de la plaque est à 120°C (avec un pistolet IR).
- On pose la coupelle contenant l'échantillon sus-décrit sur la plaque chauffante à 120°C.
- On déclenche le chronomètre.

Toutes les 30 secondes, on enfonce superficiellement une pointe métallique (Poinçon, clou, stylo, trombone...) à la surface de l'échantillon. Il se forme un fil très fin qui s'étire beaucoup quand on approche du « skinning time (ST) » (qui correspond au début de formation d'une peau en surface), le fil se transforme en un petit tube qui se rompt très rapidement. On considère que la peau est formée lorsque l'on déplace la pointe métallique de gauche à droite sans rompre ce tube collé à la pointe.
- On vérifie régulièrement si la température des échantillons et de la plaque chauffante est homogène à l'aide d'un pistolet IR.
- Puis, on réalise dans un second temps, trois mesures complémentaires afin d'affiner la mesure du temps de formation de peau obtenue par la première estimation. Pour cela, pour chacune des mesures complémentaires, on procède comme précédemment, en préparant un nouvel échantillon de 5g à partir de la même composition de polyuréthane(s) silylé(s) et du même catalyseur de réticulation. On dépose la coupelle contenant l'échantillon sur une plaque chauffante à 120°C, puis on déclenche le chronomètre. 30 secondes avant le ST trouvé lors du premier essai, on vérifie toutes les 5 secondes la surface de l'échantillon comme précédemment jusqu'à déterminer le ST exact de l'échantillon.

On note le temps moyen de formation de peau de l'échantillon exprimé en minutes ou secondes: skinning time moyen ST ± 3 x σ, où σ représente l'écart type (ce qui correspond à un intervalle de confiance de 99,9%).

### Mesure de la viscosité

La viscosité a été déterminée à 23°C un jour après la fabrication de la composition de polyuréthanes silylés (J+1) et la viscosité a été déterminée à 23°C après vieillissement, c'est-à-dire après stockage de la composition de polyuréthanes silylés à 60°C pendant 48h.

La mesure de la viscosité après vieillissement permet d'évaluer la stabilité de la viscosité.

### Mesure des propriétés mécaniques

Pour chacune des compositions (Ref.1, Ref.2 et C1 à C10), l'élongation à la rupture (ou allongement) et la contrainte à la rupture ont été mesurées selon les méthodes décrites ci-dessous :
Mesure de la contrainte à la rupture et de l'élongation à la rupture par essai de traction :
Le principe de la mesure consiste à étirer dans une machine de traction, dont la mâchoire mobile se déplace à une vitesse constante égale à 100 mm/minute, une éprouvette standard constituée de la composition réticulée et à enregistrer, au moment où se produit la rupture de l'éprouvette, la contrainte de traction appliquée (en MPa), ainsi que l'allongement de l'éprouvette (en %).

L'éprouvette standard est en forme d'haltère, comme illustré dans la norme internationale ISO 37. La partie étroite de l'haltère utilisée a pour longueur 20 mm, pour largeur 4 mm et pour épaisseur 300 µm.

Pour préparer l'haltère, on applique la composition de polyuréthane(s) silylé(s) à l'état liquide sur une feuille A4 de papier siliconé avec une barre de Mayer pour obtenir une couche adhésive ayant une épaisseur de 300 µm qui est laissé durant 2 semaines à 23°C et 50 % d'humidité relative pour sa réticulation. L'haltère est alors obtenu par simple découpe dans la couche adhésive réticulée.

Les résultats de l'ensemble de ces mesures sont indiqués dans le tableau 3 ci-dessous.

**Tableau 3 : Evaluation des compositions de polyuréthane(s) silylé(s)**

| | Viscosité à 23°C à J+1 (Pa.s) | Viscosité à 23°C après 2 jours de vieillissement à 60°C (Pa.s) | Temps de réticulation à 120°C (s) | Elongation à la rupture (%) | Contrainte à la rupture (MPa) |
|---|---|---|---|---|---|
| Ref.1 | 324 | 340 | 159 | 82 | 1,20 |
| Ref.2 | 124 | 129 | 195 | 221 | 1,05 |
| C1 | 290 | 300 | 85 | 113 | 0,72 |
| C2 | 144 | 138 | 93 | 145 | 1,25 |
| C3 | 594 | 625 | 68 | 200 | 0,32 |
| C4 | 78,8 | 88 | 70 | 237 | 0,90 |
| C5 | 63,8 | 104 | 70 | 113 | 0,43 |
| C6 | 173 | 348 | 155 | 140 | 0,43 |
| C7 | 33,3 | 42 | 68 | 182 | 0,76 |
| C8 | 44 | 72 | 70 | 158 | 0,67 |
| C9 | 122 | 154 | 155 | 146 | 0,70 |
| C10 | 74 | 78 | 105 | 220 | 0,81 |

Le tableau 3 ci-dessus montre que les compositions C1 à C10 selon l'invention présentent des temps de réticulation plus faibles et donc des vitesses de réticulation plus élevées que les compositions comparatives Ref.1 et Ref.2. En effet, la composition Ref.2 obtenue selon un procédé où lors de la troisième étape un monol est ajouté (et non un diol comme requis par la présente invention), présente une vitesse de réticulation plus faible que les compositions C1 à C10 selon l'invention.

Cette amélioration de la vitesse de réticulation des compositions de polyuréthanes silylés de l'invention a été démontrée sur un large panel de compositions, présentant des performances mécaniques diverses. De fait les compositions de polyuréthanes silylés selon l'invention peuvent être avantageusement mises en œuvre dans un grand nombre d'applications telles que mentionnées dans la présente demande.

On peut également noter que la quantité de polyol (G) ajoutée à l'étape (iii) a une influence sur la stabilité de la viscosité. Ainsi, la viscosité sera d'autant plus stable le ratio (r3) est proche de 1. En particulier, les compositions C1-C4, C7, C9-C10 pour lesquelles le ratio (r3) vaut 1 sont les plus stables thermiquement.

### Ex. 4 : Préparation et test sur des articles auto-adhésifs

4.1. Différentes compositions adhésives de type PSA ont été préparées selon le protocole ci-dessous. Chaque composition adhésive de type PSA comprend 51,2% en poids d'une composition de polyuréthane(s) silylé(s) (Ref.1, C1, C4, C8 ou C9), 46% en poids d'une résine tackifiante (Dertophene^{®} H150), 0,8% en poids d'anti-oxydant de type phénol encombré (Irganox^{®} 1010, disponible auprès de BASF) et 2% en poids d'un catalyseur de réticulation (K-KAT^{®} 5218), par rapport au poids de la composition adhésive.

La composition adhésive de type PSA est préparée en introduisant tout d'abord la résine tackifiante Dertophene^{®} H150 dans un réacteur en verre sous vide et chauffé à environ 160°C. Puis, une fois la résine bien fondue, la composition de polyuréthane(s) silylé(s) et l'anti-oxydant sont ajoutés.

Le mélange est agité sous vide durant 15 minutes, puis refroidi à 70°C. Le catalyseur (K-KAT^{®} 5218) est alors introduit. Le mélange est maintenu sous vide et sous agitation durant 10 minutes supplémentaires.

4.2 Les articles auto-adhésifs sont ensuite préparés à partir de la composition adhésive de type PSA et d'une couche support PET selon le protocole décrit ci-dessous, avec un grammage de l'ordre de 50 g/m².

On utilise une couche support rectangulaire de Polyéthylène téréphtalate (PET) d'épaisseur 50 µm et de dimensions 20 cm sur 40 cm.

On préchauffe la composition adhésive de type PSA obtenue au paragraphe 4.1 à une température proche de 100°C et on l'introduit dans une cartouche d'où l'on extrude un cordon qui est déposé près du bord de la couche support parallèlement à sa largeur.

La composition renfermée dans ce cordon est ensuite répartie sur la totalité de la surface de la couche support, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/m², ce qui représente une épaisseur de l'ordre d'environ 50 µm.

La couche support de PET ainsi revêtue est alors placée dans une étuve à 120 °C et environ 5% d'humidité relative durant 5 minutes pour permettre la réticulation de la composition, puis contrecollée sur une couche anti-adhérente protectrice, rectangulaire et de mêmes dimensions.

La couche support PET ainsi obtenue est soumise aux tests décrits ci-après

4.3 Les performances sont évaluées 7 jours après préparation de l'article (J+7) selon les protocoles décrits ci-dessous.

### Test de pelage à 180° sur plaque d'acier inoxydable

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.

Une éprouvette sous forme de bande rectangulaire (25 mm x 175 mm) est découpée dans la couche support PET revêtu de la composition adhésive réticulée obtenue précédemment. Cette éprouvette est fixée sur les 2/3 de sa longueur (après enlèvement de la portion de couche anti-adhérente protectrice correspondante), sur un substrat constitué d'une plaque d'acier inoxydable. L'assemblage obtenu est laissé 20 minutes à température ambiante. Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Les résultats sont exprimés en N/cm et indiqués dans le tableau 4.

### Test d'adhésion instantanée (également dénommé test de la boucle)

Le pouvoir collant immédiat ou tack est évalué par le test d'adhésion instantanée dit de la boucle, décrit dans la méthode FINAT n° 9, dont le principe est le suivant.

Une éprouvette sous forme de bande rectangulaire (25 mm x 175 mm) est découpée dans la couche support PET revêtu de la composition adhésive réticulée obtenue précédemment. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque.

Les résultats sont exprimés en N/cm² et sont indiqués dans le tableau 4.

**Tableau 4 : Tests sur les articles auto-adhésifs**

| | Ref.1 | C1 | C4 | C8 | C9 |
|---|---|---|---|---|---|
| Pelage à 180°C (J+7) (N/cm) | 9,4 | 10,2 | 19,6 | 15,7 | 8,5 |
| Adhésion instantanée (J+7) (N/cm²) | 1,1 | 4,0 | 3,5 | 3,4 | 3,4 |

Il a été observé que les articles auto-adhésifs, à base d'une composition de polyuréthanes silylés C1, C4, C8 ou C9 selon l'invention présentent globalement de très bonnes performances. En particulier, ils présentent une résistance au pelage comparable voire supérieure (jusqu'à environ 2 fois supérieure) à celle mesurée sur l'article obtenu à partir de la composition de référence. En outre, les articles auto-adhésifs selon l'invention présentent une meilleure adhésion instantanée (le pouvoir collant immédiat étant jusqu'à environ 4 fois supérieur à la valeur mesurée sur l'article obtenu à partir de la composition de référence).

## Revendications

1. Procédé de synthèse d'une composition de polyuréthanes silylés (A), ledit procédé comprenant les étapes séquentielles :
(i) de polyaddition d'au moins un polyol (B) avec au moins un diisocyanate (C), dans laquelle le ratio (r1) du nombre de fonctions NCO sur le nombre total de fonctions OH, et de fonctions NH et NH₂ éventuellement présentes, est strictement supérieur à 1, de préférence le ratio (r1) va de 1,1 à 4, de préférence de 1,5 à 3, préférentiellement de 1,5 à 2,5, avantageusement de 1,7 à 2, par exemple (r1) vaut 1,9;
(ii) de réaction de la composition obtenue à l'étape (i) avec au moins un silane (E) choisi parmi les aminosilanes (El) et les mercaptosilanes (E2), dans laquelle le ratio (r2) du nombre de fonctions NCO sur le nombre de fonctions amine et/ou thiol est strictement supérieur à 1, de préférence le ratio (r2) va de 1,1 à 5 , en particulier de 1,1 à 2,5, préférentiellement de 1,1 à 2, avantageusement de 1,1 à 1,5, par exemple de 1,3 à 1,5;
(iii) de réaction de la composition issue de l'étape (ii) avec au moins un composé (G) comprenant au moins deux fonctions identiques ou différentes choisies parmi les fonctions alcool, amine primaire, amine secondaire et thiol, dans laquelle le ratio (r3) du nombre de fonctions NCO sur le nombre de fonctions alcool, amine primaire, amine secondaire et thiol est inférieur ou égal à 1.

2. Procédé de synthèse selon la revendication 1, dans lequel lors de l'étape (ii), le ratio (r2) du nombre de fonctions NCO sur le nombre de fonctions amine et/ou thiol va de 1,1 à 5, en particulier de 1,1 à 2,5, préférentiellement de 1,1 à 2, avantageusement de 1,1 à 1,5, par exemple de 1,3 à 1,5 lorsque le composé (G) comprend uniquement deux fonctions choisies parmi les fonctions alcool, amine primaire, amine secondaire et thiol et dans lequel lors de l'étape (ii), le ratio (r2) du nombre de fonctions NCO sur le nombre de fonctions amine et/ou thiol va de 1,1 à 2,5, de préférence de 1,3 à 2,5, lorsque le composé (G) comprend au moins trois fonctions choisies parmi les fonctions alcool, amine primaire, amine secondaire et thiol.

3. Procédé de synthèse selon la revendication 1 ou 2, dans lequel lors de l'étape (iii), le ratio (r3) du nombre de fonctions NCO sur le nombre de fonctions alcool, amine primaire, amine secondaire et thiol est supérieur ou égal à 0,6, de préférence va de 0,7 à 1, de préférence encore va de 0,8 à 1, avantageusement de 0,9 à 1.

4. Procédé de synthèse selon l'une quelconque des revendications 1 à 3, dans lequel le silane (E) présente la structure suivante :
X' - R³ - Si(R⁴)ₚ(OR⁵)₃₋ₚ
dans laquelle :
X' représente un groupement NH₂, NHR⁷ et/ou SH,
R⁷ représente un radical alkyle linéaire, ramifié ou cyclique ayant de 1 à 12 atomes de carbone ou un radical alcényle ayant de 2 à 12 atomes de carbone ou un radical aryle ayant de 6 à 12 atomes de carbone,
R³ représente un radical divalent alkylène linéaire ou ramifié comprenant de 1 à 6 atomes de carbone,
R⁴ et R⁵, identiques ou différents, représentent chacun un radical alkyle linéaire ou ramifié comprenant de 1 à 4 atomes de carbone, deux groupements -OR⁵ peuvent éventuellement être engagés dans un même cycle,
p représente un nombre entier égal à 0, 1 ou 2.

5. Procédé de synthèse selon l'une quelconque des revendications 1 à 4, dans lequel le composé (G) présente une masse moléculaire moyenne en nombre allant de 100 g/mol à 80000 g/mol, ou de 250 g/mol à 50000 g/mol, ou de 400 à 25000 g/mol, ou de 600 à 20000 g/mol, ou encore de 1100 à 12000 g/mol, voire de 1500 à 10000 g/mol.

6. Procédé de synthèse selon l'une quelconque des revendications 1 à 5, dans lequel le composé (G) est choisi parmi les polyols, de préférence parmi les diols et triols.

7. Procédé de synthèse selon l'une quelconque des revendications 1 à 6, dans lequel la composition obtenue à l'issue de l'étape (iii) est une composition de polyuréthanes silylés (A) comprenant un premier type de polyuréthane silylé (A1) de formule (I) et un deuxième type de polyuréthane silylé (A2) de formule (IIa), (IIb) ou (IIc):
(R⁵O)₃₋ₚ(R⁴)ₚSi-R³-X- Jg- [Lg]ₙ - Mg - X - R³ - Si(R⁴)ₚ(OR⁵)₃₋ₚ (I)
(R⁵O)₃₋ₚ(R⁴)ₚSi-R³-X- Jg - [Lg]ₘ - Mg - A - R⁶ - A' - Md - [Ld]ₘ - Jd - X - R³ - Si(R⁴)ₚ(OR⁵)₃₋ₚ (IIa) 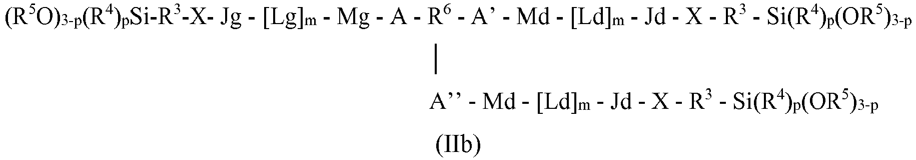 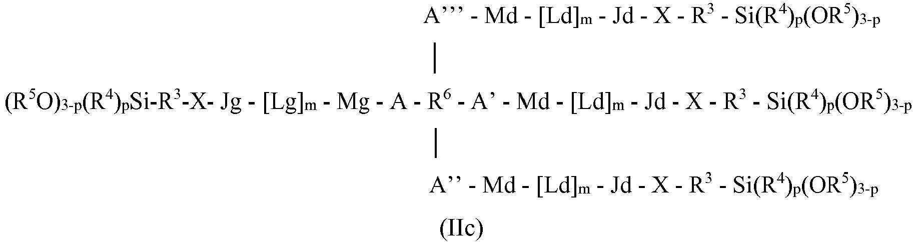
formules dans lesquelles :
Jg représente un groupement de type : 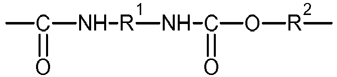
Lg représente un groupement de type : 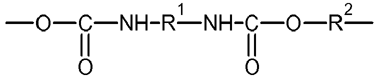
Mg représente un groupement de type : 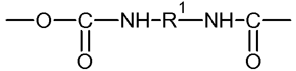
Jd représente un groupement de type : 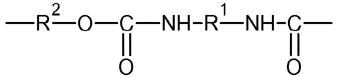
Ld représente un groupement de type : 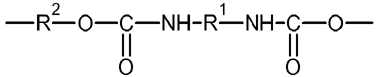
Md représente un groupement de type : 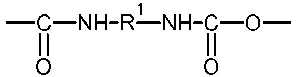
R¹ représente un radical divalent hydrocarboné comprenant de 5 à 15 atomes de carbone qui peut être aromatique ou aliphatique, linéaire, ramifié ou cyclique,
R³ représente un radical divalent alkylène linéaire ou ramifié comprenant de 1 à 6 atomes de carbone,
R² représente un radical divalent hydrocarboné comprenant éventuellement un ou plusieurs hétéroatomes, présentant de préférence une masse moléculaire moyenne en nombre allant de 100 g/mol à 30000 g/mol,
R⁴ et R⁵, identiques ou différents, représentent chacun un radical alkyle linéaire ou ramifié comprenant de 1 à 4 atomes de carbone, deux groupements -OR⁵ peuvent éventuellement être engagés dans un même cycle,
X représente un radical divalent choisi parmi -NH-, -NR⁷- ou -S-,
R⁷ représente un radical alkyle linéaire, ramifié ou cyclique ayant de 1 à 12 atomes de carbone ou un radical alcényle ayant de 2 à 12 atomes de carbone ou un radical aryle ayant de 6 à 12 atomes de carbone,
R⁶ représente un radical divalent, trivalent ou tétravalent, choisi parmi les radicaux polysiloxanes et parmi les radicaux hydrocarbonés comprenant éventuellement une ou plusieurs fonctions carbonyle (C=O) et éventuellement un ou plusieurs hétéroatomes, ledit radical R⁶ présentant de préférence une masse moléculaire moyenne en nombre allant de 100 g/mol à 80000 g/mol,
A, A', A" et A‴ représentent, indépendamment les uns des autres, un atome d'oxygène, un atome de soufre, un radical divalent -NH- ou un radical divalent -NR⁸-, de préférence A, A', A" et A'" représentent chacun un atome d'oxygène dans les formules (IIa), (IIb) ou (IIc),
R⁸ représente un radical alkyle linéaire ramifié ou cyclique comprenant de 1 à 18 atomes de carbone, de préférence de 1 à 12 atomes de carbone, de préférence encore de 1 à 6 atomes de carbone,
n est un entier supérieur ou égal à 1 tel que le polyuréthane (A1) présente une masse moléculaire moyenne en nombre Mn(1) allant de 800 à 100000 Dalton,
m est un entier supérieur ou égal à 1 tel que le polyuréthane (A2) présente une masse moléculaire moyenne en nombre Mn(2) telle que le rapport Mn(2)/Mn(1) est supérieur ou égal à 2,0, de préférence allant de 1600 à 200000 Dalton,
p est un nombre entier égal à 0, 1 ou 2.

8. Composition de polyuréthanes silylés (A) comprenant un premier type de polyuréthane silylé (A1) de formule (I) et un deuxième type de polyuréthane silylé (A2) de formule (IIa), (IIb) ou (IIc):
(R⁵O)₃₋ₚ(R⁴)ₚSi-R³-X- Jg- [Lg]ₙ - Mg - X - R³ - Si(R⁴)ₚ(OR⁵)₃₋ₚ (I)
(R⁵O)₃₋ₚ(R⁴)ₚSi-R³-X- Jg - [Lg]ₘ - Mg - A - R⁶ - A' - Md - [Ld]ₘ - Jd - X - R³ - Si(R⁴)ₚ(OR⁵)₃₋ₚ (IIa) 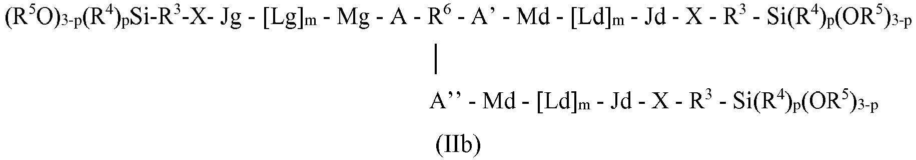 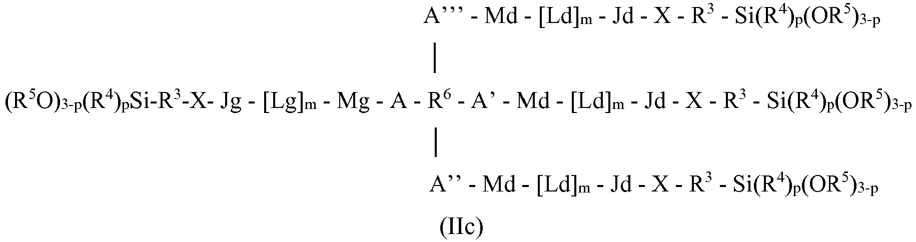
formules dans lesquelles :
Jg représente un groupement de type : 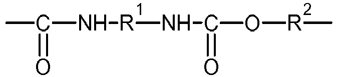
Lg représente un groupement de type : 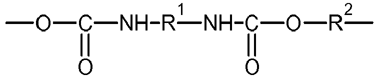
Mg représente un groupement de type : 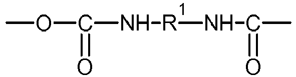
Jd représente un groupement de type : 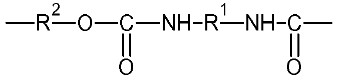
Ld représente un groupement de type : 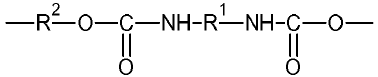
Md représente un groupement de type : 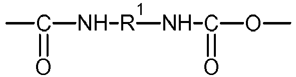
R¹ représente un radical divalent hydrocarboné comprenant de 5 à 15 atomes de carbone qui peut être aromatique ou aliphatique, linéaire, ramifié ou cyclique,
R³ représente un radical divalent alkylène linéaire ou ramifié comprenant de 1 à 6 atomes de carbone,
R² représente un radical divalent hydrocarboné comprenant éventuellement un ou plusieurs hétéroatomes, présentant de préférence une masse moléculaire moyenne en nombre allant de 100 g/mol à 30000 g/mol,
R⁴ et R⁵, identiques ou différents, représentent chacun un radical alkyle linéaire ou ramifié comprenant de 1 à 4 atomes de carbone, deux groupements -OR⁵ peuvent éventuellement être engagés dans un même cycle,
X représente un radical divalent choisi parmi -NH-, -NR⁷- ou -S-,
R⁷ représente un radical alkyle linéaire, ramifié ou cyclique ayant de 1 à 12 atomes de carbone ou un radical alcényle ayant de 2 à 12 atomes de carbone ou un radical aryle ayant de 6 à 12 atomes de carbone,
R⁶ représente un radical divalent, trivalent ou tétravalent, choisi parmi les radicaux polysiloxanes et parmi les radicaux hydrocarbonés comprenant éventuellement une ou plusieurs fonctions carbonyle (C=O) et éventuellement un ou plusieurs hétéroatomes, ledit radical R⁶ présentant de préférence une masse moléculaire moyenne en nombre allant de 100 g/mol à 80000 g/mol,
A, A', A" et A‴ représentent, indépendamment les uns des autres, un atome d'oxygène, un atome de soufre, un radical divalent -NH- ou un radical divalent -NR⁸-, de préférence A, A', A" et A'" représentent chacun un atome d'oxygène dans les formules (IIa), (IIb) ou (IIc),
R⁸ représente un radical alkyle linéaire ramifié ou cyclique comprenant de 1 à 18 atomes de carbone, de préférence de 1 à 12 atomes de carbone, de préférence encore de 1 à 6 atomes de carbone,
n est un entier supérieur ou égal à 1 tel que le polyuréthane (A1) présente une masse moléculaire moyenne en nombre Mn(1) allant de 800 à 100000 Dalton,
m est un entier supérieur ou égal à 1 tel que le polyuréthane (A2) présente une masse moléculaire moyenne en nombre Mn(2) telle que le rapport Mn(2)/Mn(1) est supérieur ou égal à 2,0, de préférence allant de 1600 à 200000 Dalton,
p est un nombre entier égal à 0, 1 ou 2.

9. Composition de polyuréthanes silylés selon la revendication 8, dans laquelle Mn(2) va de 1600 à 200000 g/mol, de préférence de 3000 à 160000 g/mol, de préférence encore de 5000 à 100000 g/mol.

10. Composition de polyuréthanes silylés selon la revendication 8 ou 9, dans laquelle le polyuréthane silylé (A2) est de formule (IIb) ou (IIc) et le rapport Mn(2)/Mn(1) est supérieur ou égal à 3.

11. Composition de polyuréthanes silylés selon l'une quelconque des revendications 8 à 10, présentant une viscosité à 23°C allant de 20000 à 2 000 000 mPa.s, la viscosité étant mesurée à l'aide d'un viscosimètre Brookfield RTV, avec une vitesse de rotation de 20 tours/minute et une aiguille 7.

12. Composition comprenant au moins une composition de polyuréthanes silylés selon l'une quelconque des revendications 8 à 11 et au moins un composant additionnel choisi parmi les catalyseurs, les charges, les résines tackifiantes, les promoteurs d'adhésion, les plastifiants ou diluants, les agents rhéologiques, les agents dessicants, les stabilisants U.V. et/ou thermiques, et les solvants.

13. Composition selon la revendication 12, comprenant au moins ladite composition de polyuréthanes silylés, au moins une résine tackifiante et au moins un catalyseur de réticulation.

14. Composition selon la revendication 13, comprenant :
- de 17 à 85% en poids, de préférence de 27 à 75% en poids, de préférence encore de 37 à 65% en poids, d'une composition de polyuréthanes silylés telle que préparée selon le procédé défini dans l'une quelconque des revendications 1 à 7 ou telle que définie dans l'une quelconque des revendications 8 à 11,
- de 12% à 80% en poids, de préférence de 22 à 70% en poids, de préférence de 32 à 60% en poids de résine(s) tackifiante(s), et
- de 0,01 à 5% en poids de catalyseur(s) de réticulation,
par rapport au poids total de la composition.

15. Article auto-adhésif comprenant une couche support revêtue d'une couche de composition telle que définie selon la revendication 13 ou 14, ladite couche étant obtenue par réticulation de ladite composition.

## Patentansprüche

1. Verfahren zur Synthese einer Zusammensetzung von silylierten Polyurethanen (A), wobei das Verfahren die folgenden aufeinanderfolgenden Schritte umfasst:
(i) die Polyaddition mindestens eines Polyols (B) mit mindestens einem Diisocyanat (C), wobei das Verhältnis (r1) der Zahl von NCO-Funktionen zur Gesamtzahl von OH-Funktionen und gegebenenfalls vorhandenen NH- und NH₂-Funktionen streng größer als 1 ist, das Verhältnis (r1) bevorzugt von 1,1 bis 4, bevorzugt von 1,5 bis 3, vorzugsweise von 1,5 bis 2,5, vorteilhafterweise von 1,7 bis 2, beträgt, (r1) beispielsweise 1,9 beträgt;
(ii) die Reaktion der in Schritt (i) erhaltenen Zusammensetzung mit mindestens einem Silan (E), das aus Aminosilanen (E1) und Mercaptosilanen (E2) ausgewählt ist, wobei das Verhältnis (r2) der Zahl von NCO-Funktionen zur Zahl der Amin- und/oder Thiolfunktionen streng größer als 1 ist, das Verhältnis (r2) bevorzugt von 1,1 bis 5, insbesondere von 1,1 bis 2,5, vorzugsweise von 1,1 bis 2, vorteilhafterweise von 1,1 bis 1,5, beispielsweise von 1,3 bis 1,5, beträgt;
(iii) die Reaktion der Zusammensetzung aus Schritt (ii) mit mindestens einer Zusammensetzung (G), die mindestens zwei identische oder verschiedene Funktionen umfasst, die aus Alkohol-, primären Amin-, sekundären Amin- und Thiolfunktionen ausgewählt sind, wobei das Verhältnis (r3) der Zahl von NCO-Funktionen zur Zahl von Alkohol-, primären Amin-, sekundären Aminund Thiolfunktionen kleiner als oder gleich 1 ist.

2. Syntheseverfahren nach Anspruch 1, wobei in Schritt (ii) das Verhältnis (r2) der Zahl von NCO-Funktionen zur Zahl von Amin- und/oder Thiolfunktionen von 1,1 bis 5, insbesondere von 1,1 bis 2,5, vorzugsweise von 1,1 bis 2, vorteilhafterweise von 1,1 bis 1,5, beispielsweise von 1,3 bis 1,5, beträgt, wenn die Verbindung (G) ausschließlich zwei Funktionen umfasst, die aus Alkohol-, primären Amin-, sekundären Amin- und Thiolfunktionen ausgewählt sind, und wobei in Schritt (ii) das Verhältnis (r2) der Zahl von NCO-Funktionen zur Zahl der Amin- und/oder Thiolfunktionen von 1,1 bis 2,5, bevorzugt von 1,3 bis 2,5, beträgt, wenn die Verbindung (G) mindestens drei Funktionen umfasst, die aus den Alkohol-, primären Amin-, sekundären Amin- und Thiofunktionen ausgewählt sind.

3. Syntheseverfahren nach Anspruch 1 oder 2, wobei in Schritt (iii) das Verhältnis (r3) der Zahl von NCO-Funktionen zur Zahl von Alkohol-, primären Amin-, sekundären Amin- und Thiolfunktionen größer als oder gleich 0,6 ist, bevorzugt von 0,7 bis 1 beträgt, noch mehr bevorzugt von 0,8 bis 1, vorteilhafterweise von 0,9 bis 1, beträgt.

4. Syntheseverfahren nach einem der Ansprüche 1 bis 3, wobei das Silan (E) die folgende Struktur:
**X' - R³ - Si(R⁴)ₚ(OR⁵)₃₋ₚ**
aufweist, wobei:
X' für eine NH₂-, NHR⁷- und/oder SH-Gruppe steht,
R⁷ für einen verzweigten oder cyclischen linearen Alkylrest mit 1 bis 12 Kohlenstoffatomen oder einen Alkenylrest mit 2 bis 12 Kohlenstoffatomen oder einen Arylrest mit 6 bis 12 Kohlenstoffatomen steht,
R³ für einen 1 bis 6 Kohlenstoffatomen umfassenden unverzweigten oder verzweigten zweiwertigen Alkylenrest steht,
R⁴ und R⁵, die identisch oder verschieden sein können, jeweils für einen 1 bis 4 Kohlenstoffatome umfassenden unverzweigten oder verzweigten Alkylrest stehen, wobei sich gegebenenfalls zwei -OR⁵-Gruppen im gleichen Ring befinden können,
p für eine ganze Zahl gleich 0, 1 oder 2 steht.

5. Syntheseverfahren nach einem der Ansprüche 1 bis 4, wobei die Verbindung (G) ein Zahlenmittel der Molmasse von 100 g/mol bis 80.000 g/mol oder von 250 g/mol bis 50.000 g/mol oder von 400 bis 25.000 g/mol oder von 600 bis 20.000 g/mol oder noch von 1100 bis 12.000 g/mol oder sogar von 1500 bis 10.000 g/mol aufweist.

6. Syntheseverfahren nach einem der Ansprüche 1 bis 5, wobei die Verbindung (G) aus Polyolen, bevorzugt aus Diolen und Triolen, ausgewählt ist.

7. Syntheseverfahren nach einem der Ansprüche 1 bis 6, wobei es sich bei der aus Schritt (iii) erhaltenen Zusammensetzung um eine Zusammensetzung von silylierten Polyurethanen (A) handelt, die einen ersten Typ eines silylierten Polyurethans (A1) der Formel (I) und einen zweiten Typ eines silylierten Polyurethans (A2) der Formel (IIa), (IIb) oder (IIc) umfasst:
**(R⁵O)₃₋ₚ(R⁴)ₚSi-R³-X- Jg- [Lg]ₙ - Mg - X - R³ - Si(R⁴)ₚ(OR⁵)₃₋ₚ** **(I)**
**(R⁵O)₃₋ₚ(R⁴)ₚSi-R³-X- Jg - [Lg]ₘ - Mg - A - R⁶- A' - Md - [Ld]ₘ - Jd - X - R³ - Si(R⁴)ₚ(OR⁵)₃₋ₚ** **(IIa)** 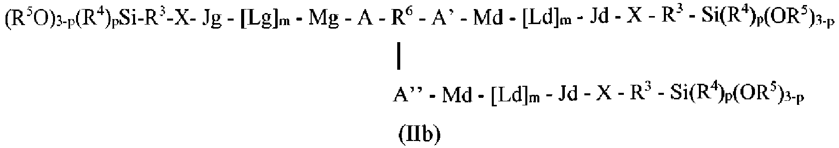 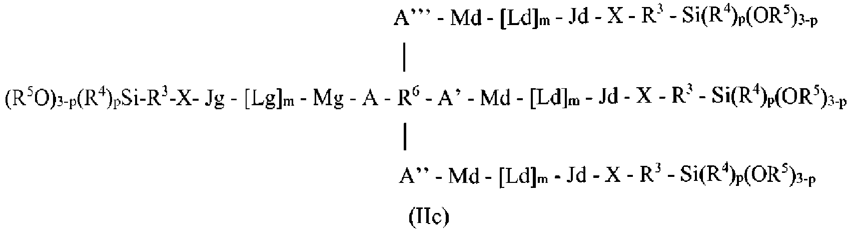
wobei in den Formeln:
Jg für eine Gruppe des Typs: 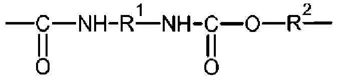 steht,
Lg für eine Gruppe des Typs: 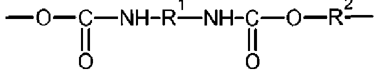 steht,
Mg für eine Gruppe des Typs: 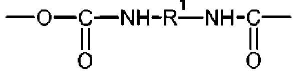 steht,
Jd für eine Gruppe des Typs: 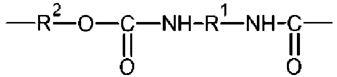 steht,
Ld für eine Gruppe des Typs: 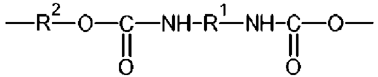 steht,
Md für eine Gruppe des Typs: 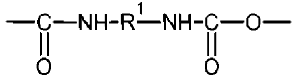 steht,
R¹ für einen 5 bis 15 Kohlenstoffatome umfassenden zweiwertigen Kohlenwasserstoffrest steht, der aromatisch oder aliphatisch, unverzweigt, verzweigt oder cyclisch sein kann,
R³ für einen 1 bis 6 Kohlenstoffatomen umfassenden unverzweigten oder verzweigten zweiwertigen Alkylenrest steht,
R² für einen zweiwertigen Kohlenwasserstoffrest steht, der gegebenenfalls ein oder mehrere Heteroatome umfasst, die bevorzugt ein Zahlenmittel der Molmasse von 100 g/mol bis 30.000 g/mol aufweisen,
R⁴ und R⁵, die identisch oder verschieden sein können, jeweils für einen 1 bis 4 Kohlenstoffatome umfassenden unverzweigten oder verzweigten Alkylrest stehen, wobei sich gegebenenfalls zwei -OR⁵-Gruppen im gleichen Ring befinden können,
X für einen zweiwertigen Rest steht, der aus -NH-, -NR⁷-oder -S- ausgewählt ist,
R⁷ für einen unverzweigten, verzweigten oder cyclischen Alkylrest mit 1 bis 12 Kohlenstoffatomen oder einen Alkenylrest mit 2 bis 12 Kohlenstoffatomen oder einen Arylrest mit 6 bis 12 Kohlenstoffatomen steht,
R⁶ für einen zweiwertigen, dreiwertigen oder vierwertigen Rest steht, der aus Polysiloxanresten und aus Kohlenwasserstoffresten ausgewählt ist, die gegebenenfalls eine oder mehrere Carbonyl- (C=O-) Funktionen und gegebenenfalls ein oder mehrere Heteroatome umfassen, wobei der Rest R⁶ bevorzugt ein Zahlenmittel der Molmasse von 100 g/mol bis 80.000 g/mol aufweist,
A, A′, A" und A‴ unabhängig voneinander für ein Sauerstoffatom, ein Schwefelatom, einen zweiwertigen -NH--Rest oder einen zweiwertigen -NR⁸-Rest stehen, wobei A, A′, Aʺ und A‴ in den Formeln (IIa), (IIb) oder (IIc) bevorzugt jeweils für ein Sauerstoffatom stehen,
R⁸ für einen unverzweigten, verzweigten oder cyclischen Alkylrest steht, der 1 bis 18 Kohlenstoffatome, bevorzugt 1 bis 12 Kohlenstoffatome, noch mehr bevorzugt 1 bis 6 Kohlenstoffatome umfasst,
n eine ganze Zahl größer als oder gleich 1 derart ist, dass das Polyurethan (A1) ein Zahlenmittel Mn(1) der Molmasse von 800 bis 100.000 Dalton aufweist,
m eine ganze Zahl größer als oder gleich 1 derart ist, dass das Polyurethan (A2) ein Zahlenmittel Mn(2) der Molmasse derart aufweist, dass das Verhältnis Mn(2)/Mn(1) größer als oder gleich 2,0 ist, bevorzugt von 1600 bis 200.000 Dalton beträgt,
p eine ganze Zahl gleich 0, 1 oder 2 ist.

8. Zusammensetzung von silylierten Polyurethanen (A), die einen ersten Typ eines silylierten Polyurethans (A1) der Formel (I) und einen zweiten Typ eines silylierten Polyurethans (A2) der Formel (IIa), (IIb) oder (IIc) umfasst:
**(R⁵O)₃₋ₚ(R⁴)ₚSi-R³-X- Jg- [Lg]ₙ** - **Mg** - **X** - **R³** - **Si(R⁴)ₚ(OR⁵)₃₋ₚ** **(I)**
**(R⁵O)₃₋ₚ(R⁴)ₚSi-R³-X- Jg** - **[Lg]ₘ** - **Mg** - **A** - **R⁶** - **A' - Md** - **[Ld]ₘ** - **Jd** - **X** - **R³**- **Si(R⁴)ₚ(OR⁵)₃₋ₚ** **(IIa)** 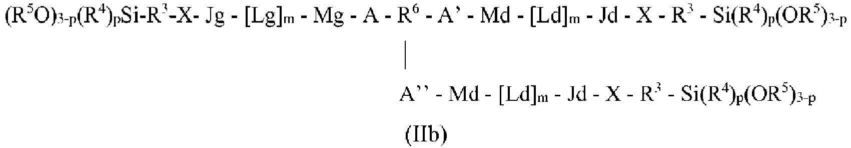 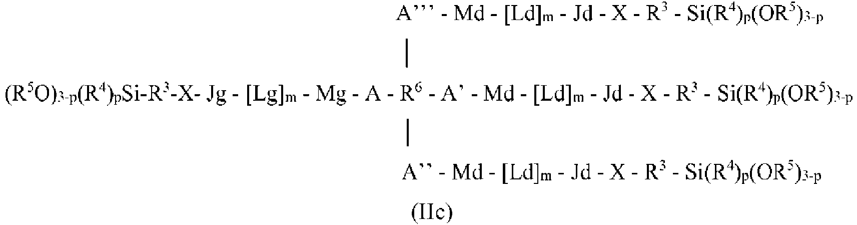
wobei in den Formeln:
Jg für eine Gruppe des Typs: 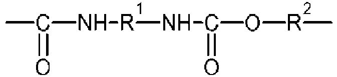 steht,
Lg für eine Gruppe des Typs: 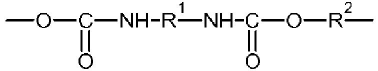 steht,
Mg für eine Gruppe des Typs: steht, 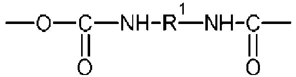
Jd für eine Gruppe des Typs: 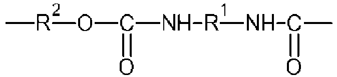 steht,
Ld für eine Gruppe des Typs: 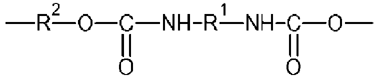 steht,
Md für eine Gruppe des Typs: 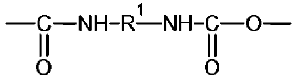 steht,
R¹ für einen 5 bis 15 Kohlenstoffatome umfassenden zweiwertigen Kohlenwasserstoffrest steht, der aromatisch oder aliphatisch, unverzweigt, verzweigt oder cyclisch sein kann,
R³ für einen 1 bis 6 Kohlenstoffatomen umfassenden unverzweigten oder verzweigten zweiwertigen Alkylenrest steht,
R² für einen zweiwertigen Kohlenwasserstoffrest steht, der gegebenenfalls ein oder mehrere Heteroatome umfasst, die bevorzugt ein Zahlenmittel der Molmasse von 100 g/mol bis 30.000 g/mol aufweisen,
R⁴ und R⁵, die identisch oder verschieden sein können, jeweils für einen 1 bis 4 Kohlenstoffatome umfassenden unverzweigten oder verzweigten Alkylrest stehen, wobei sich gegebenenfalls zwei -OR⁵-Gruppen im gleichen Ring befinden können,
X für einen zweiwertigen Rest steht, der aus -NH-, -NR⁷- oder -S- ausgewählt ist,
R⁷ für einen unverzweigten, verzweigten oder cyclischen Alkylrest mit 1 bis 12 Kohlenstoffatomen oder einen Alkenylrest mit 2 bis 12 Kohlenstoffatomen oder einen Arylrest mit 6 bis 12 Kohlenstoffatomen steht,
R⁶ für einen zweiwertigen, dreiwertigen oder vierwertigen Rest steht, der aus Polysiloxanresten und aus Kohlenwasserstoffresten ausgewählt ist, die gegebenenfalls eine oder mehrere Carbonyl- (C=O-) Funktionen und gegebenenfalls ein oder mehrere Heteroatome umfassen, wobei der Rest R⁶ bevorzugt ein Zahlenmittel der Molmasse von 100 g/mol bis 80.000 g/mol aufweist,
A, A′, Aʺ und A‴ unabhängig voneinander für ein Sauerstoffatom, ein Schwefelatom, einen zweiwertigen - NH--Rest oder einen zweiwertigen -NR⁸--Rest stehen, wobei A, A′, Aʺ und A‴ in den Formeln (IIa), (IIb) oder (IIc) bevorzugt jeweils für ein Sauerstoffatom stehen,
R⁸ für einen unverzweigten, verzweigten oder cyclischen Alkylrest steht, der 1 bis 18 Kohlenstoffatome, bevorzugt 1 bis 12 Kohlenstoffatome, noch mehr bevorzugt 1 bis 6 Kohlenstoffatome umfasst,
n eine ganze Zahl größer als oder gleich 1 derart ist, dass das Polyurethan (A1) ein Zahlenmittel Mn(1) der Molmasse von 800 bis 100.000 Dalton aufweist,
m eine ganze Zahl größer als oder gleich 1 derart ist, dass das Polyurethan (A2) ein Zahlenmittel Mn(2) der Molmasse derart aufweist, dass das Verhältnis Mn(2)/Mn(1) größer als oder gleich 2,0 ist, bevorzugt von 1600 bis 200.000 Dalton beträgt,
p eine ganze Zahl gleich 0, 1 oder 2 ist.

9. Zusammensetzung von silylierten Polyurethanen nach Anspruch 8, wobei Mn(2) von 1600 bis 200.000 g/mol, bevorzugt von 3000 bis 160.000 g/mol, noch mehr bevorzugt von 5000 bis 100.000 g/mol, beträgt.

10. Zusammensetzung von silylierten Polyurethanen nach Anspruch 8 oder 9, wobei das silylierte Polyurethan (A2) die Formel (IIb) oder (IIc) aufweist und das Verhältnis Mn(2)/Mn(1) größer als oder gleich 3 ist.

11. Zusammensetzung von silylierten Polyurethanen nach einem der Ansprüche 8 bis 10, die eine Viskosität bei 23 °C von 20.000 bis 2.000.000 mPa.s aufweist, wobei die Viskosität mittels eines Brookfield-Viskosimeters RTV mit einer Drehzahl von 20 U./min und einer Nadel 7 gemessen wird.

12. Zusammensetzung, die mindestens eine Zusammensetzung von silylierten Polyurethanen nach einem der Ansprüche 8 bis 11 und mindestens eine zusätzliche Komponente aufweist, die aus Katalysatoren, Füllstoffen, klebrigmachenden Harzen, Haftungsvermittlern, Weichmachern oder Verdünnungsmitteln, rheologischen Mitteln, Trocknungsmitteln, UV- und/oder Wärmestabilisatoren und Lösungsmitteln ausgewählt ist.

13. Zusammensetzung nach Anspruch 12, die mindestens die Verbindung von silylierten Polyurethanen, mindestens ein klebrigmachendes Harz und mindestens einen Vernetzungskatalysator umfasst.

14. Zusammensetzung nach Anspruch 13, die Folgendes umfasst:
- 17 bis 85 Gew.-%, bevorzugt 27 bis 75 Gew.-%, noch mehr bevorzugt 37 bis 65 Gew.% einer Zusammensetzung von silylierten Polyurethanen wie denjenigen, die nach dem Verfahren hergestellt sind, das in einem der Ansprüche 1 bis 7 definiert ist, oder denjenigen, die in einem der Ansprüche 8 bis 11 definiert sind,
- 12 Gew.-% bis 80 Gew.-%, bevorzugt 22 bis 70 Gew.-%, bevorzugt 32 bis 60 Gew.-% eines klebrigmachenden Harzes (klebrigmachende Harze) und
- 0,01 bis 5 Gew.-% eines Vernetzungskatalysators (Vernetzungskatalysatoren),
bezogen auf das Gesamtgewicht der Zusammensetzung.

15. Selbstklebender Artikel, der eine Trägerschicht umfasst, die mit einer Schicht der Zusammensetzung gemäß der Definition in Anspruch 13 oder 14 beschichtet ist, wobei die Schicht durch Vernetzen der Zusammensetzung erhalten wird.

## Claims

1. Process for the synthesis of a composition of silylated polyurethanes (A), said process comprising the sequential stages:
(i) of polyaddition of at least one polyol (B) with at least one diisocyanate (C), in which the ratio (r1) of the number of NCO functional groups to the total number of OH functional groups, and of NH and NH₂ functional groups optionally present, is strictly greater than 1; preferably, the ratio (r1) ranges from 1.1 to 4, preferably from 1.5 to 3, preferentially from 1.5 to 2.5, advantageously from 1.7 to 2; for example, (r1) has the value 1.9;
(ii) of reaction of the composition obtained in stage (i) with at least one silane (E) chosen from aminosilanes (E1) and mercaptosilanes (E2), in which the ratio (r2) of the number of NCO functional groups to the number of amine and/or thiol functional groups is strictly greater than 1; preferably, the ratio (r2) ranges from 1.1 to 5, in particular from 1.1 to 2.5, preferentially from 1.1 to 2, advantageously from 1.1 to 1.5, for example from 1.3 to 1.5;
(iii) of reaction of the composition resulting from stage (ii) with at least one compound (G) comprising at least two identical or different functional groups chosen from alcohol, primary amine, secondary amine and thiol functional groups, in which the ratio (r3) of the number of NCO functional groups to the number of alcohol, primary amine, secondary amine and thiol functional groups is less than or equal to 1.

2. Synthesis process according to Claim 1, in which, during stage (ii), the ratio (r2) of the number of NCO functional groups to the number of amine and/or thiol functional groups ranges from 1.1 to 5, in particular from 1.1 to 2.5, preferentially from 1.1 to 2, advantageously from 1.1 to 1.5, for example from 1.3 to 1.5, when the compound (G) comprises solely two functional groups chosen from alcohol, primary amine, secondary amine and thiol functional groups, and in which, during stage (ii), the ratio (r2) of the number of NCO functional groups to the number of amine and/or thiol functional groups ranges from 1.1 to 2.5, preferably from 1.3 to 2.5, when the compound (G) comprises at least three functional groups chosen from alcohol, primary amine, secondary amine and thiol functional groups.

3. Synthesis process according to Claim 1 or 2, in which, during stage (iii), the ratio (r3) of the number of NCO functional groups to the number of alcohol, primary amine, secondary amine and thiol functional groups is greater than or equal to 0.6, preferably ranges from 0.7 to 1, more preferably ranges from 0.8 to 1, advantageously from 0.9 to 1.

4. Synthesis process according to any one of Claims 1 to 3, in which the silane (E) exhibits the following structure:
X′ - R³ - Si(R⁴)ₚ(OR⁵)₃₋ₚ
in which:
X' represents an NH₂, NHR⁷ and/or SH group,
R⁷ represents a linear, branched or cyclic alkyl radical having from 1 to 12 carbon atoms or an alkenyl radical having from 2 to 12 carbon atoms or an aryl radical having from 6 to 12 carbon atoms,
R³ represents a linear or branched divalent alkylene radical comprising from 1 to 6 carbon atoms,
R⁴ and R⁵, which are identical or different, each represent a linear or branched alkyl radical comprising from 1 to 4 carbon atoms; two -OR⁵ groups can optionally be involved in one and the same ring,
p represents an integer equal to 0, 1 or 2.

5. Synthesis process according to any one of Claims 1 to 4, in which the compound (G) exhibits a number-average molecular weight ranging from 100 g/mol to 80 000 g/mol, or from 250 g/mol to 50 000 g/mol, or from 400 to 25 000 g/mol, or from 600 to 20 000 g/mol, or else from 1100 to 12 000 g/mol, indeed even from 1500 to 10 000 g/mol.

6. Synthesis process according to any one of Claims 1 to 5, in which the compound (G) is chosen from polyols, preferably from diols and triols.

7. Synthesis process according to any one of Claims 1 to 6, in which the composition obtained on conclusion of stage (iii) is a composition of silylated polyurethanes (A) comprising a first type of silylated polyurethane (A1) of formula (I) and a second type of silylated polyurethane (A2) of formula (IIa), (IIb) or (IIc):
(R⁵O)₃₋ₚ(R⁴)ₚSi-R³-X- Jg- [Lg]ₙ - Mg - X - R³ - Si(R⁴)ₚ(OR⁵)₃₋ₚ (I)
(R⁵O)₃₋ₚ(R⁴)ₚSi-R³-X- Jg - [Lg]ₘ - Mg - A - R⁶ - A' - Md-[Ld]ₘ - Jd - X - R³ - Si(R⁴)ₚ(OR⁵)₃₋ₚ (IIa) 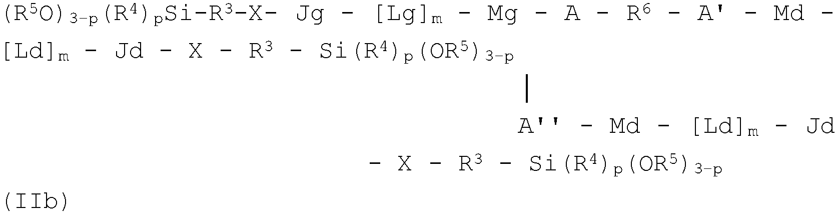 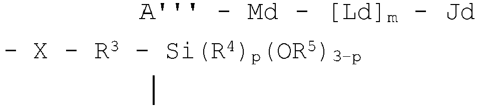 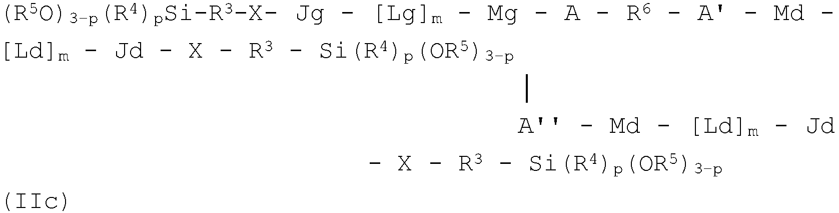
in which formulae:
Jg represents a group of type: 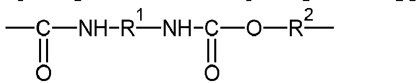
Lg represents a group of type: 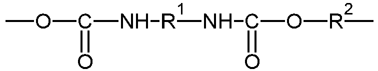
Mg represents a group of type: 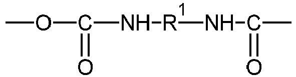
Jd represents a group of type: 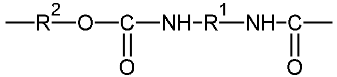
Ld represents a group of type: 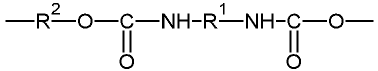
Md represents a group of type: 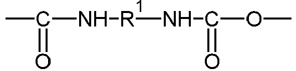
R¹ represents a divalent hydrocarbon radical comprising from 5 to 15 carbon atoms which can be aromatic or aliphatic and linear, branched or cyclic,
R³ represents a linear or branched divalent alkylene radical comprising from 1 to 6 carbon atoms,
R² represents a divalent hydrocarbon radical optionally comprising one or more heteroatoms, preferably exhibiting a number-average molecular weight ranging from 100 g/mol to 30 000 g/mol,
R⁴ and R⁵, which are identical or different, each represent a linear or branched alkyl radical comprising from 1 to 4 carbon atoms; two -OR⁵ groups can optionally be involved in one and the same ring,
X represents a divalent radical chosen from -NH-, -NR⁷-or -S-,
R⁷ represents a linear, branched or cyclic alkyl radical having from 1 to 12 carbon atoms or an alkenyl radical having from 2 to 12 carbon atoms or an aryl radical having from 6 to 12 carbon atoms,
R⁶ represents a divalent, trivalent or tetravalent radical chosen from polysiloxane radicals and from hydrocarbon radicals optionally comprising one or more carbonyl (C=O) functional groups and optionally one or more heteroatoms, said R⁶ radical preferably exhibiting a number-average molecular weight ranging from 100 g/mol to 80 000 g/mol,
A, A', A" and A‴ represent, independently of one another, an oxygen atom, a sulfur atom, a divalent -NH-radical or a divalent -NR⁸- radical; preferably, A, A', A" and A‴ each represent an oxygen atom in the formulae (IIa), (IIb) or (IIc),
R⁸ represents a linear, branched or cyclic alkyl radical comprising from 1 to 18 carbon atoms, preferably from 1 to 12 carbon atoms, more preferably from 1 to 6 carbon atoms,
n is an integer greater than or equal to 1 such that the polyurethane (A1) exhibits a number-average molecular weight Mn(1) ranging from 800 to 100 000 daltons,
m is an integer greater than or equal to 1 such that the polyurethane (A2) exhibits a number-average molecular weight Mn(2) such that the ratio Mn(2)/Mn(1) is greater than or equal to 2.0, preferably ranging from 1600 to 200 000 daltons,
p is an integer equal to 0, 1 or 2.

8. Composition of silylated polyurethanes (A) comprising a first type of silylated polyurethane (A1) of formula (I) and a second type of silylated polyurethane (A2) of formula (IIa), (IIb) or (IIc):
(R⁵O)₃₋ₚ(R⁴)ₚSi-R³-X- Jg- [Lg]ₙ - Mg - X - R³ - Si(R⁴)ₚ(OR⁵)₃₋ₚ (I)
(R⁵O)₃₋ₚ(R⁴)ₚSi-R³-X- Jg - [Lg]ₘ - Mg - A - R⁶ - A' - Md-[Ld]ₘ - Jd - X - R³ - Si(R⁴)ₚ(OR⁵)₃₋ₚ (IIa) 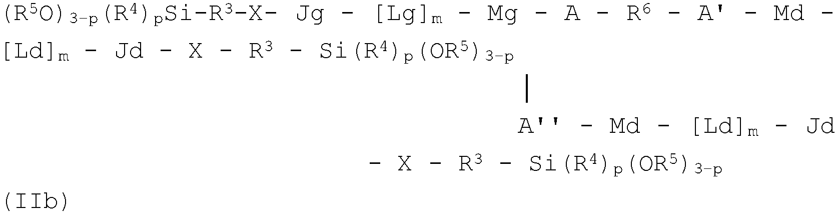 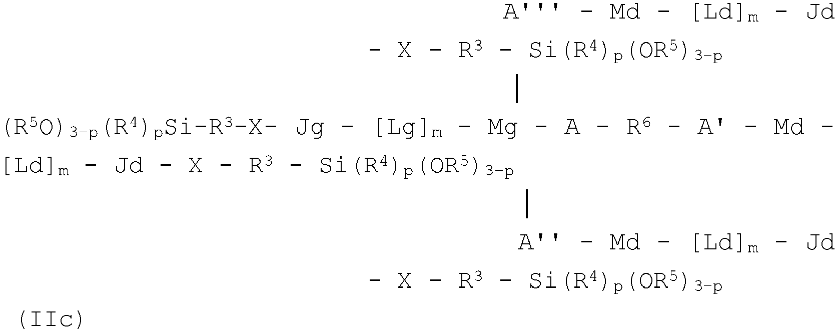
in which formulae:
Jg represents a group of type: 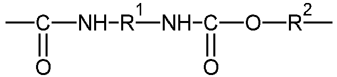
Lg represents a group of type: 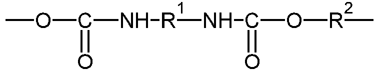
Mg represents a group of type: 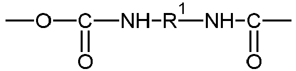
Jd represents a group of type: 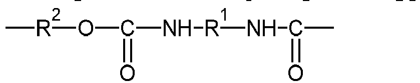
Ld represents a group of type: 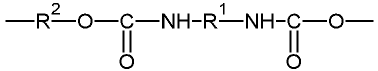
Md represents a group of type: 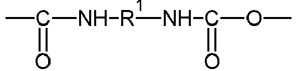
R¹ represents a divalent hydrocarbon radical comprising from 5 to 15 carbon atoms which can be aromatic or aliphatic and linear, branched or cyclic,
R³ represents a linear or branched divalent alkylene radical comprising from 1 to 6 carbon atoms,
R² represents a divalent hydrocarbon radical optionally comprising one or more heteroatoms, preferably exhibiting a number-average molecular weight ranging from 100 g/mol to 30 000 g/mol,
R⁴ and R⁵, which are identical or different, each represent a linear or branched alkyl radical comprising from 1 to 4 carbon atoms; two -OR⁵ groups can optionally be involved in one and the same ring,
X represents a divalent radical chosen from -NH-, -NR⁷-or -S-,
R⁷ represents a linear, branched or cyclic alkyl radical having from 1 to 12 carbon atoms or an alkenyl radical having from 2 to 12 carbon atoms or an aryl radical having from 6 to 12 carbon atoms,
R⁶ represents a divalent, trivalent or tetravalent radical chosen from polysiloxane radicals and from hydrocarbon radicals optionally comprising one or more carbonyl (C=O) functional groups and optionally one or more heteroatoms, said R⁶ radical preferably exhibiting a number-average molecular weight ranging from 100 g/mol to 80 000 g/mol,
A, A', A" and A‴ represent, independently of one another, an oxygen atom, a sulfur atom, a divalent -NH-radical or a divalent -NR⁸- radical; preferably, A, A', A" and A‴ each represent an oxygen atom in the formulae (IIa), (IIb) or (IIc),
R⁸ represents a linear, branched or cyclic alkyl radical comprising from 1 to 18 carbon atoms, preferably from 1 to 12 carbon atoms, more preferably from 1 to 6 carbon atoms,
n is an integer greater than or equal to 1 such that the polyurethane (A1) exhibits a number-average molecular weight Mn(1) ranging from 800 to 100 000 daltons,
m is an integer greater than or equal to 1 such that the polyurethane (A2) exhibits a number-average molecular weight Mn(2) such that the ratio Mn(2)/Mn(1) is greater than or equal to 2.0, preferably ranging from 1600 to 200 000 daltons,
p is an integer equal to 0, 1 or 2.

9. Composition of silylated polyurethanes according to Claim 8, in which Mn(2) ranges from 1600 to 200 000 g/mol, preferably from 3000 to 160 000 g/mol, more preferably from 5000 to 100 000 g/mol.

10. Composition of silylated polyurethanes according to Claim 8 or 9, in which the silylated polyurethane (A2) is of formula (IIb) or (IIc) and the ratio Mn(2)/Mn(1) is greater than or equal to 3.

11. Composition of silylated polyurethanes according to any one of Claims 8 to 10, exhibiting a viscosity at 23°C ranging from 20 000 to 2 000 000 mPa.s, the viscosity being measured using a Brookfield RTV viscometer, with a rotational speed of 20 revolutions/minute and a 7 spindle.

12. Composition comprising at least one composition of silylated polyurethanes according to any one of Claims 8 to 11 and at least one additional component chosen from catalysts, fillers, tackifying resins, adhesion promoters, plasticizers or diluents, rheological agents, drying agents, UV and/or heat stabilizers, and solvents.

13. Composition according to Claim 12, comprising at least said composition of silylated polyurethanes, at least one tackifying resin and at least one crosslinking catalyst.

14. Composition according to Claim 13, comprising:
- from 17% to 85% by weight, preferably from 27% to 75% by weight, more preferably from 37% to 65% by weight, of a composition of silylated polyurethanes as prepared according to the process defined in any one of Claims 1 to 7 or as defined in any one of Claims 8 to 11,
- from 12% to 80% by weight, preferably from 22% to 70% by weight, preferably from 32% to 60% by weight, of tackifying resin(s), and
- from 0.01% to 5% by weight of crosslinking catalyst(s),
with respect to the total weight of the composition.

15. Self-adhesive article comprising a support layer coated with a layer of composition as defined according to Claim 13 or 14, said layer being obtained by crosslinking said composition.
